# EUROPÄISCHE PATENTSCHRIFT

(11) **EP 3 853 472 B1**
(45) Veröffentlichungstag und Bekanntmachung des Hinweises auf die Patenterteilung: **14.01.2026**
(21) Anmeldenummer: 19753338.3
(22) Anmeldetag: 12.08.2019
(51) Int. Cl.: F03D 13/10, F03D 13/20, F03D 80/80

(54) **WINDENERGIEANLAGEN-TURMSEGMENT FÜR EINEN WINDENERGIEANLAGEN-TURM UND VERFAHREN**
WIND TURBINE TOWER SEGMENT FOR A WIND TURBINE TOWER AND METHOD
SEGMENT DE TOUR D'ÉOLIENNE POUR TOUR D'ÉOLIENNE ET PROCÉDÉ

(30) Priorität: 17.09.2018 DE 102018122638
(43) Veröffentlichungstag der Anmeldung: 28.07.2021
(73) Patentinhaber: Wobben Properties GmbH, 26607 Aurich (DE)
(72) Erfinder: JORDAN, Holger, 39167 Irxleben (DE)
(74) Vertreter: Eisenführ Speiser
(86) Internationale Anmeldenummer: PCT/EP2019/071593
(87) Internationale Veröffentlichungsnummer: WO 2020/057864

(56) Entgegenhaltungen:
- EP-A1- 2 653 715
- EP-A2- 2 199 497
- WO-A1-2017/039915
- DE-A1- 102010 015 075
- DE-A1- 102013 217 088
- DE-U1- 202010 007 565
- DE-U1- 202010 007 565

## Beschreibung

Die Erfindung betrifft ein Windenergieanlagen-Turmsegment, einen Windenergieanlagen-Turm, eine Windenergieanlage, eine Verwendung einer Halteanordnung, eine Verwendung einer ersten Transportvorrichtung und einer zweiten Transportvorrichtung sowie Verfahren zur Montage eines Windenergieanlagen-Turmsegments und zur Montage eines Windenergieanlagen-Turmabschnitts.

Windenergieanlagen sind bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist.

Türme sind in der Regel schlanke Bauwerke, die vorzugsweise eine große Höhe aufweisen und ferner vorzugsweise orthogonal zu dieser Höhe vergleichsweise geringe Abmessungen aufweisen. Türme können im Wesentlichen aus Beton und/oder Stahl bestehen oder diese Materialien umfassen. Türme können ferner aus einem einzelnen Bauteil oder mehreren Bauteilen bestehen oder derartige Bauteile umfassen. Türme können zylindrische und/oder konische Abschnitte, insbesondere entlang ihrer Längserstreckung, aufweisen, wobei Türme oftmals zylindrische und konische Abschnitte umfassen. Darüber hinaus können derartige Abschnitte auch ringsegmentweise ausgebildet werden, sodass ein zylindrischer Abschnitt aus verschiedenen Segmenten in Ringrichtung bzw. nebeneinander zusammengesetzt ist.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Da solche Türme nicht oder lediglich mit hohem Aufwand in einem Stück transportiert werden können, ist ein großer Kostentreiber die Montage des Windenergieanlagen-Turmes an dem Aufstellort der Windenergieanlage. Insbesondere bei in Umfangsrichtung segmentierten Türmen sind der Montageaufwand und in Folge dessen die Montagekosten hoch.

Türme von Windenergieanlagen sind in ihrem Inneren meist mit verschiedenen Turminneneinbauten versehen. Turminneneinbauten können beispielsweise Kabelanordnungen, wie Leistungskabel, Versorgungskabel oder Steuerungskabel, Aufzugsanordnungen, Arbeitsplattformen, Leitern oder Beleuchtungseinheiten umfassen. Verschiedene Lösungen zur Anordnung von Turminneneinbauten wurden vorgeschlagen, beispielsweise in der DE 10 2012 008 120 A1, DE 20 2010 000 756 U1, DE 10 2005 049 289 A1 oder EP 2 653 715 A1. Nachteilig an existierenden Lösungen ist jedoch unter anderem, dass die Turminneneinbauten in der Regel erst an dem Aufstellort der Windenergieanlage in dem Turminneren montiert werden können, was zu hohen Kosten und zeitaufwendigen Montagetätigkeit führt. Darüber hinaus benötigen die Kabelanordnungen in der Regel einen großen Raumbedarf, sodass für weitere Turminneneinbauten nur noch eingeschränkt Platz zur Verfügung steht.

Das Deutsche Patent- und Markenamt hat in der Prioritätsanmeldung zu vorliegender Anmeldung folgenden Stand der Technik recherchiert: EP 2 653 715 A1, DE 10 2012 008 120 A1, DE 20 2010 007 565 U1, DE 10 2005 049 289 A1, DE 10 2013 217 088 A1.

In dem internationalen Recherchenbericht wurde ferner folgender Stand der Technik recherchiert: WO 2017/039915 A1. In der WO 2017/039915 A1 wird folgender Stand der Technik genannt: US 9,175,670 B2 und US 6,782,667 B2.

Es ist daher eine Aufgabe der vorliegenden Erfindung ein Windenergieanlagen-Turmsegment, einen Windenergieanlagen-Turm, eine Windenergieanlage, eine Verwendung einer Halteanordnung, eine Verwendung einer ersten Transportvorrichtung und einer zweiten Transportvorrichtung sowie Verfahren zur Montage eines Windenergieanlagen-Turmsegments und zur Montage eines Windenergieanlagen-Turmabschnitts vorzuschlagen, welche einen oder mehrere der genannten Nachteile verringern oder beseitigen. Insbesondere ist es eine Aufgabe der vorliegenden Erfindung, eine Lösung vorzuschlagen, welche eine bessere Raumausnutzung im Turminneren ermöglicht.

Diese Aufgabe wird erfindungsgemäß gelöst durch ein Windenergieanlagen-Turmsegment für einen Windenergieanlagen-Turm, umfassend ein Mantelsegment mit einer Erstreckung in Richtung einer Segmenthöhe, einer Segment-Ringrichtung und einer Segmentdicke, und einer oberen Horizontalstoßseite und einer unteren Horizontalstoßseite, eine Haltevorrichtung zur Anordnung von Bedarfsmitteln im Inneren eines Windenergieanlagen-Turmes, mit einem Hauptabschnitt, und mindestens einem Auslegeabschnitt, wobei der Hauptabschnitt und der mindestens eine Auslegeabschnitt in Segment-Ringrichtung benachbart zueinander angeordnet sind, wobei der Hauptabschnitt und der mindestens eine Auslegeabschnitt einen Haltevorrichtungswinkel einschließen, eine Kopplungsvorrichtung, die in einem Kopplungsabschnitt des Mantelsegments angrenzend an die obere Horizontalstoßseite angeordnet ist, wobei die Haltevorrichtung mittels der Kopplungsvorrichtung mit dem Mantelsegment gekoppelt ist.

Die Erfindung beruht unter anderem auf der Erkenntnis, dass die Anordnung von Bedarfsmitteln, insbesondere Kabeln, im Inneren eines Windenergieanlagen-Turmes durch eine Haltevorrichtung mit einem Hauptabschnitt und mindestens einem Auslegeabschnitt, die einen Haltevorrichtungswinkel einschließen, besonders platzsparend angeordnet werden können. Ferner beruht die Erfindung auf der Erkenntnis, dass es besonders vorteilhaft ist, wenn eine Haltevorrichtung zur Anordnung von Bedarfsmitteln, insbesondere von Kabeln, bereits vor der eigentlichen Montage des Windenergieanlagen-Turmes an einem Mantelsegment vormontierbar ist und somit beispielsweise bereits im Werk an einem Mantelsegment angeordnet werden kann. Somit kann die meist aufwendige Montage am Aufstellort der Windenergieanlage vereinfacht werden.

Hierzu sieht die Lösung die Haltevorrichtung mit dem Hauptabschnitt und dem mindestens einen Auslegeabschnitt vor, welche den Haltevorrichtungswinkel einschließen. Die Haltevorrichtung weist vorzugsweise eine Haupterstreckungsrichtung auf, die größer 20 Meter, und/oder kleiner 20 Meter, und/oder kleiner 18 Meter, und/oder kleiner 15 Meter, und/oder kleiner 12 Meter, und/oder kleiner 10 Meter ist. Das Mantelsegment kann grundsätzlich jegliche mögliche Geometrie annehmen. Insbesondere ist es bevorzugt, dass das Mantelsegment sich entlang der Segment-Ringrichtung mit einem konstanten Radius um eine Symmetrieachse erstreckt. Nebeneinander angeordnete Mantelsegmente sind vorzugsweise konzentrisch angeordnet. Ein aus derartigen und derartig angeordneten Mantelsegmenten gebildeter Turm weist in der Regel einen im Wesentlichen runden Querschnitt auf. Das Mantelsegment kann jedoch in Segment-Ringrichtung auch polygonal ausgebildet sein. Ein aus derartigen Mantelsegmenten gebildeter Turm weist in der Regel einen polygonalen Querschnitt auf.

Durch die Erstreckung in Richtung der Segmenthöhe und der Segment-Ringrichtung kann eine trapezförmige oder rechteckige Fläche aufgespannt werden. Die trapezförmige Ausbildung ist beispielsweise für solche Mantelsegmente bevorzugt, die an konischen Abschnitten des Windenergieanlagen-Turmes zum Einsatz kommen. Die rechteckige Ausbildung ist beispielsweise für einen zylindrischen Abschnitt des Windenergieanlagen-Turmes bevorzugt. Die Segmentdicke kann auch als Wandstärke bezeichnet werden. Folglich ist die Segment-Ringrichtung in der Regel die Richtung, die orthogonal zu der Segmenthöhe und orthogonal zu der Segmentdicke ausgerichtet ist.

Die obere Horizontalstoßseite und die untere Horizontalstoßseite sind insbesondere als derartige Seiten des Mantelsegments zu verstehen, die nach Montage zu einem Windenergieanlagen-Turm einem darüber oder darunter angeordneten Mantelsegment zugewandt sind. Die obere Horizontalstoßseite ist vorzugsweise als turmspitzenzugewandte Horizontalstoßseite ausgebildet. Darüber hinaus ist die untere Horizontalstoßseite vorzugsweise als turmspitzenabgewandte Horizontalstoßseite ausgebildet.

Der Hauptabschnitt und der mindestens eine Auslegeabschnitt sind in Segment-Ringrichtung benachbart zueinander angeordnet. Das heißt insbesondere, dass diese im Wesentlichen orthogonal zur Segmenthöhe und im Wesentlichen orthogonal zur Segmentdicke benachbart zueinander angeordnet sind. Die Kopplungsvorrichtung ist in dem Kopplungsabschnitt angeordnet. Vorzugsweise erstreckt sich der Kopplungsabschnitt von der oberen Horizontalstoßseite ausgehend in Richtung der Segmenthöhe mit einer Erstreckung, die weniger als 50 % der Segmenthöhe beträgt. Ferner vorzugsweise beträgt die Erstreckung des Kopplungsabschnitts in Richtung der Segmenthöhe ausgehend von der Horizontalstoßseite weniger als 40 %, und/oder weniger als 30 %, und/oder weniger als 20 %, und/oder weniger als 10 %, und/oder weniger als 5 %, und/oder weniger als 2 %, und/oder weniger als 1 % der Segmenthöhe. Darüber hinaus ist es bevorzugt, dass ein der oberen Horizontalstoßseite zugewandtes Ende der Kopplungsvorrichtung weniger als 5 Meter, und/oder weniger als 4 Meter, und/oder weniger als 3 Meter, und/oder weniger als 2 Meter, und/oder weniger als 1 Meter von der oberen Horizontalstoßseite beabstandet ist.

Ferner ist es bevorzugt, dass das Mantelsegment eine erste Vertikalstoßseite mit einem ersten Vertikalflansch aufweist und/oder eine zweite Vertikalstoßseite mit einem zweiten Vertikalflansch aufweist. Es ist ferner bevorzugt, dass der erste Vertikalflansch und/oder der zweite Vertikalflansch einen Winkel mit dem Mantelsegment einschließt bzw. einschließen. Des Weiteren kann an dem ersten Vertikalflansch und/oder dem zweiten Vertikalflansch ein Anschlusselement auskragend angeordnet sein. In einer bevorzugten Ausführungsvariante des Windenergieanlagen-Turmsegments ist vorgesehen, dass die Kopplungsvorrichtung an dem ersten Vertikalflansch und/oder dem zweiten Vertikalflansch angeordnet ist. Alternativ kann die Haltevorrichtung auch an dem auskragenden Anschlusselement angeordnet sein. Des Weiteren kann das Mantelsegment an seiner oberen Horizontalstoßseite einen Horizontalflansch aufweisen, der vorzugsweise angeordnet und ausgebildet ist, dass die Kopplungsvorrichtung an diesem angeordnet werden kann.

Die Haltevorrichtung ist vorzugsweise an der Kopplungsvorrichtung angeordnet. Die Anordnung kann beispielsweise mittels einer Bolzenverbindung erfolgen. Darüber hinaus kann die Haltevorrichtung an der Kopplungsvorrichtung hängend angeordnet werden, sodass die Kopplungsvorrichtung im Wesentlichen Kräfte in Richtung der Segmenthöhe und/oder in Richtung einer Haupterstreckungsrichtung der Haltevorrichtung aufnimmt.

Ein derartiges Windenergieanlagen-Turmsegment erleichtert die Vorausrüstung mit Betriebsmitteln, insbesondere mit Kabeln. Die vollständige Montage des Windenergieanlagen-Turmsegments kann in der Werkstatt und/oder auf der Baustelle erfolgen, wobei diese unabhängig von der eigentlichen Turmherstellung und/oder -montage ist. Ferner können auch zwei oder mehrere Haltevorrichtungen für einen Windenergieanlagen-Turm vorgesehen werden, indem zwei oder mehrere Windenergieanlagen-Turmsegmente umfassend jeweils mindestens eine Haltevorrichtung in dem Windenergieanlagen-Turm verbaut werden, wobei diese Windenergieanlagen-Turmsegmente übereinander und/oder nebeneinander angeordnet werden können. Wenn zwei oder mehrere Windenergieanlagen-Turmsegmente mit Haltevorrichtungen übereinander angeordnet werden, ist es bevorzugt, dass die jeweiligen Haltevorrichtungen nicht miteinander verbunden werden. Durch die nicht miteinander verbundenen Haltevorrichtungen wird die Verlagerung der einzelnen Haltevorrichtungen an der Turmwand reduziert.

Vorzugsweise sind an den Haltevorrichtungen angeordnete Steigleitern bzw. Steigleiterabschnitte miteinander verbunden. Für einen Monteur besteht die Möglichkeit von dem Hauptabschnitt der Haltevorrichtung unmittelbar an den mindestens einen Auslegeabschnitt zu gelangen und dort Montagetätigkeiten vorzunehmen. Insbesondere kann ein Monteur von dem Hauptabschnitt ausgehend Kabel an dem mindestens einen Auslegeabschnitt montieren, wobei gegebenenfalls keine zusätzliche Montageplattform erforderlich ist. Die Verbindung von Kabeln übereinander angeordneter Haltevorrichtungen erfolgt vorzugsweise mittels Kabelschraubverbindern. Die Windenergieanlagen-Turmsegmente und insbesondere die Haltevorrichtungen können dahingehend fortgebildet werden, dass diese ein Aufzugssystem bzw. ein Liftsystem führen können, wobei gegebenenfalls die Festigkeit der Haltevorrichtungen zu erhöhen ist.

Es ist vorgesehen, dass das Windenergieanlagen-Turmsegment ein Horizontallager umfasst, das in einem Lagerabschnitt angrenzend an die untere Horizontalstoßseite des Mantelsegments angeordnet ist, wobei die Haltevorrichtung mittels des Horizontallagers gelagert ist, wobei vorzugsweise das Horizontallager angeordnet und ausgebildet ist, als Festlager für Lagerkräfte orthogonal zur Segmenthöhe und/oder zu einer Haupterstreckungsrichtung der Haltevorrichtung zu wirken und/oder vorzugsweise als Loslager für Lagerkräfte in Richtung der Segmenthöhe und/oder Haupterstreckungsrichtung der Haltevorrichtung.

Vorzugsweise ist in dieser Ausführungsvariante die Kopplungsvorrichtung der oberen Horizontalstoßseite zugewandt und das Horizontallager von der oberen Horizontalstoßseite abgewandt. Insbesondere ist es bevorzugt, dass das Horizontallager von der unteren Horizontalstoßseite in Richtung der Segmenthöhe weniger als 50 % der Segmenthöhe beabstandet ist. Ferner vorzugsweise ist das Horizontallager von der unteren Horizontalstoßseite in Richtung der Segmenthöhe mit weniger als 40 %, und/oder weniger als 30 %, und/oder weniger als 20 %, und/oder weniger als 10 %, und/oder weniger als 5 %, und/oder weniger als 2 %, und/oder weniger als 1 % der Segmenthöhe beabstandet. Ferner ist es bevorzugt, dass die Beabstandung des Horizontallagers von der unteren Horizontalstoßseite weniger als 5 Meter, und/oder weniger als 4 Meter, und/oder weniger als 3 Meter, und/oder weniger als 2 Meter, und/oder weniger als 1 Meter beträgt. Das Horizontallager ist vorzugsweise angeordnet und ausgebildet, Schwingungen der Haltevorrichtung zu begrenzen oder zu vermeiden.

Das als Festlager für Lagerkräfte orthogonal zur Segmenthöhe und/oder orthogonal zu einer Haupterstreckungsrichtung der Haltevorrichtung ausgebildete Horizontallager wirkt insbesondere derart auf die Haltevorrichtung, dass diese sich in Haupterstreckungsrichtung und/oder in Richtung der Segmenthöhe und/oder in vertikaler Richtung eines Windenergieanlagen-Turmes bewegen kann, orthogonal zu dieser Bewegungsrichtung jedoch im Wesentlichen nicht. Das als Loslager für Lagerkräfte in Richtung der Segmenthöhe und/oder der Haupterstreckungsrichtung der Haltevorrichtung ausgebildete Horizontallager wirkt insbesondere derart auf die Haltevorrichtung, dass in dieser Richtung im Wesentlichen keine Kräfte durch das Horizontallager aufgenommen werden können.

Gemäß einer weiteren bevorzugten Ausführungsvariante des Windenergieanlagen-Turmsegments ist vorgesehen, dass die Kopplungsvorrichtung angeordnet und ausgebildet ist, bei bestimmungsgemäßer Anordnung des Windenergieanlagen-Turmsegments die Haltevorrichtung derart mit dem Mantelsegment zu koppeln, dass die Haupterstreckungsrichtung der Haltevorrichtung im Wesentlichen vertikal ausgerichtet ist, und/oder die Kopplungsvorrichtung an der Haltevorrichtung angeordnet und ausgebildet ist, als Festlager für Kräfte in Richtung der Segmenthöhe und/oder der Haupterstreckungsrichtung der Haltevorrichtung zu wirken.

Die bestimmungsgemäße Anordnung des Windenergieanlagen-Turmsegments bedeutet insbesondere, dass dieses wie vorgesehen mit Mantelsegmenten und/oder weiteren Windenergieanlagen-Turmsegmenten zu einem Windenergieanlagen-Turm angeordnet ist. Insbesondere weist der Windenergieanlagen-Turm eine im Wesentlichen vertikale Turmachse auf, die im Übrigen als Symmetrieachse ausgebildet sein kann.

Eine weitere bevorzugte Fortbildung des Windenergieanlagen-Turmsegments zeichnet sich dadurch aus, dass die Kopplungsvorrichtung an dem Mantelsegment befestigt ist. Die Befestigung der Kopplungsvorrichtung an dem Mantelsegment kann formschlüssig und/oder kraftschlüssig und/oder stoffschlüssig erfolgen. Insbesondere ist es bevorzugt, dass die Kopplungsvorrichtung mittels einer Schraubverbindung mit dem Mantelsegment verbunden ist.

Ferner umfasst das Windenergieanlagen-Turmsegment vorzugsweise einen Schwingungsdämpfer, wobei der Schwingungsdämpfer angeordnet und ausgebildet ist, Schwingungen orthogonal zur Segmenthöhe und/oder Haupterstreckungsrichtung der Haltevorrichtung zu dämpfen, wobei vorzugsweise das Horizontallager den Schwingungsdämpfer umfasst und/oder vorzugsweise das Horizontallager den Schwingungsdämpfer ausbildet, wobei vorzugsweise der Schwingungsdämpfer durch ein, zwei oder mehrere ein-, zwei- oder mehrseitig an der Haltevorrichtung anliegendes Element bzw. anliegende Elemente, insbesondere eine Platte bzw. zwei oder mehr Platten, beispielsweise aus Kunststoff, ausgebildet ist.

Insbesondere ist es bevorzugt, dass der Schwingungsdämpfer die Haltevorrichtung oder ein Teil der Haltevorrichtung in radialer Richtung umschließt. Die aus Kunststoff ausgebildeten Platten können beispielsweise aus Polyethylen hergestellt sein oder dieses umfassen. Die Platten können an einen im weiteren Verlauf noch näher erläuterten Längsträger der Haltevorrichtung angeordnet sein.

Ein derartiger Schwingungsdämpfer, der vorzugsweise mit dem Horizontallager ausgebildet ist, ermöglicht die sichere Anordnung der Haltevorrichtung an dem Mantelsegment. Durch die großen Erstreckungen in Haupterstreckungsrichtung der Haltevorrichtung im Inneren eines Windenergieanlagen-Turmes kann es zu Schwingungen der Haltevorrichtung kommen. Insbesondere beim Treffen einer Eigenfrequenz der Haltevorrichtung kann es zu ungewünschten Bewegungen der Haltevorrichtung kommen, welche durch einen Schwingungsdämpfer vermieden werden können. Der Schwingungsdämpfer verhindert eine Resonanz mit der Windenergieanlagen-Turmeigenfrequenz, womit die Stabilität, Sicherheit und Lebensdauer des Windenergieanlagen-Turmes verbessert werden kann.

In einer bevorzugten Ausführungsvariante des Windenergieanlagen-Turmsegments ist vorgesehen, dass wobei an dem Hauptabschnitt, eine Steigleiter angeordnet ist. Die Steigleiter ist vorzugsweise angeordnet und ausgebildet, dass eine Person an dieser herauf- und/oder heruntersteigen kann. Mittels der Steigleiter kann sich ein Monteur beispielsweise an dem Hauptabschnitt in vertikaler Richtung fortbewegen und von der Steigleiter aus den mindestens einen Auslegeabschnitt erreichen, um dort Montagearbeiten, beispielsweise das Anordnen von Kabeln, durchzuführen.

Gemäß einer weiteren bevorzugten Ausführungsvariante des Windenergieanlagen-Turmsegments ist vorgesehen, dass dieses einen ersten Auslegeabschnitt und einen zweiten Auslegeabschnitt umfasst, wobei der erste Auslegeabschnitt an einer ersten Seite des Hauptabschnitts und der zweite Auslegeabschnitt an einer der ersten Seite gegenüberliegenden zweiten Seite des Hauptabschnitts angeordnet ist.

Die Kapazität zur Anordnung von Bedarfsmitteln, insbesondere Kabeln, an einer Haltevorrichtung mit einem ersten Auslegeabschnitt und einem zweiten Auslegeabschnitt kann deutlich größer sein als bei einer Haltevorrichtung mit lediglich einem Auslegeabschnitt. Darüber hinaus können unterschiedliche Bedarfsmittel an den zwei Auslegeabschnitten angeordnet werden, sodass die Organisation der Montagearbeiten vereinfacht wird.

Eine weitere bevorzugte Fortbildung des Windenergieanlagen-Turmsegments zeichnet sich dadurch aus, dass dieses mindestens ein Kabel umfasst, wobei das Kabel an dem mindestens einen Auslegeabschnitt angeordnet ist, und vorzugsweise von dem Hauptabschnitt weniger als 1,5 Meter und/oder weniger als 1,25 Meter und/oder weniger als 1 Meter und/oder weniger als 0,75 Meter und/oder weniger als 0,5 Meter beabstandet ist. Infolgedessen ist die Erreichbarkeit der Kabel durch einen Monteur vereinfacht.

Ferner ist vorzugsweise vorgesehen, dass der Haltevorrichtungswinkel kleiner 170 Bogengrad, und/oder kleiner 165 Bogengrad, und/oder kleiner 160 Bogengrad, und/oder kleiner 155 Bogengrad, und/oder kleiner 150 Bogengrad, und/oder kleiner 145 Bogengrad ist. Je geringer der gewählte Haltevorrichtungswinkel von 180 Grad entfernt ist, desto weniger ragt der mindestens eine Auslegeabschnitt in den Windenergieanlagen-Turm hinein. Darüber hinaus ist dann der Abstand des mindestens einen Auslegeabschnitts zu dem Mantelsegment eher gering, sodass dieses im Wesentlichen nicht nutzbare Volumen zwischen Auslegeabschnitt und Mantelsegment möglichst gering gehalten wird. Es ist ferner bevorzugt, dass der Haltevorrichtungswinkel kleiner 180 Bogengrad, und/oder kleiner 175 Bogengrad, insbesondere bevorzugt 163 Bogengrad, und/oder kleiner 140 Bogengrad, und/oder kleiner 135 Bogengrad, und/oder kleiner 130 Bogengrad, und/oder kleiner 125 Bogengrad, und/oder kleiner 120 Bogengrad, und/oder kleiner 115 Bogengrad, und/oder kleiner 110 Bogengrad, und/oder kleiner 105 Bogengrad, und/oder kleiner 100 Bogengrad, und/oder kleiner 95 Bogengrad, und/oder kleiner 90 Bogengrad ist.

In einer weiteren bevorzugten Fortbildung des Windenergieanlagen-Turmsegments ist vorgesehen, dass das Mantelsegment eine Symmetrieachse aufweist, sich die Haltevorrichtung von einem oberen Halteende zu einem unteren Halteende erstreckt, und die Haltevorrichtung derart an dem Mantelsegment angeordnet ist, dass ein erster Achsabstand zwischen der Symmetrieachse und dem oberen Halteende größer ist als ein zweiter Achsabstand zwischen der Symmetrieachse und dem unteren Halteende.

Die Symmetrieachse des Mantelsegments ist vorzugsweise parallel zur Achse des durch das Windenergieanlagen-Turmsegment entstehenden Windenergieanlagen-Turmes ausgerichtet. In der Regel dürfte die Symmetrieachse des Mantelsegments koaxial zur Achse des Windenergieanlagen-Turmes angeordnet sein. Eine wie vorbeschrieben angeordnete Haltevorrichtung hat den besonderen Vorteil, dass ein sich auf der Haltevorrichtung befindender Monteur keine sogenannte Überkopfarbeit zu leisten hat. Die Haltevorrichtung ist nämlich leicht nach außen zur Außenwand des Windenergieanlagen-Turmsegments geneigt. Durch eine derartige Neigung kann ein Monteur sicher an der Haltevorrichtung hinauf- und/oder hinabklettern und insbesondere sicherer Montagearbeiten durchführen.

In einer bevorzugten Ausführungsvariante des Windenergieanlagen-Turmsegments ist vorgesehen, dass der Hauptabschnitt der Haltevorrichtung mindestens einen ersten Längsträger umfasst, der sich mit einer ersten Längsträger-Längsrichtung im Wesentlichen parallel zur Segmenthöhe und/oder Haupterstreckungsrichtung der Haltevorrichtung erstreckt. Der erste Längsträger kann beispielsweise ein rechteckiges Hohlprofil aufweisen. Alternativ kann der erste Längsträger ein T-förmiges oder doppel-T-förmiges Profil aufweisen. Des Weiteren kann der Längsträger auch ein Vollprofil aufweisen. Ferner ist vorzugsweise vorgesehen, dass der mindestens eine Auslegeabschnitt mindestens einen ersten Auslegequerträger mit einer ersten Querträger-Längsrichtung umfasst, wobei die erste Querträger-Längsrichtung einen orthogonal zur ersten Längsträger-Längsrichtung ausgerichteten Richtungsanteil aufweist. Insbesondere ist es bevorzugt, dass die Querträger-Längsrichtung orthogonal zur ersten Längsträger-Längsrichtung ausgerichtet ist.

Darüber hinaus kann es bevorzugt sein, dass der Hauptabschnitt der Haltevorrichtung einen zweiten Längsträger mit einer zweiten Längsträger-Längsrichtung aufweist. Vorzugsweise ist die zweite Längsträger-Längsrichtung parallel zur ersten Längsträger-Längsrichtung ausgerichtet. Der erste Längsträger ist vorzugsweise von dem zweiten Längsträger in Segment-Ringrichtung beabstandet. Darüber hinaus ist vorzugsweise vorgesehen, dass der Hauptabschnitt der Haltevorrichtung mindestens einen Hauptquerträger umfasst, der sich von dem ersten Längsträger zu dem zweiten Längsträger erstreckt. Die Haupterstreckungsrichtung des Hauptquerträgers ist vorzugsweise orthogonal zur ersten Längsträger-Längsrichtung und/oder zur zweiten Längsträger-Längsrichtung ausgerichtet bzw. weist einen Richtungsanteil in Richtung der ersten Längsträger-Längsrichtung und/oder der zweiten Längsträger-Längsrichtung auf. Vorzugsweise ist an dem ersten Längsträger und/oder an dem zweiten Längsträger der mindestens eine Auslegeabschnitt angeordnet. Ferner kann an dem ersten Längsträger der erste Auslegeabschnitt und an dem zweiten Längsträger der zweite Auslegeabschnitt angeordnet sein.

In einer bevorzugten Ausführungsvariante des Windenergieanlagen-Turmsegments ist ferner vorgesehen, dass der mindestens eine Auslegeabschnitt den mindestens einen Auslegequerträger umfasst oder als Auslegequerträger ausgebildet ist. Vorzugsweise umfasst der mindestens eine Auslegeabschnitt zwei oder mehr Auslegequerträger, die ferner vorzugsweise in Richtung der Haupterstreckungsrichtung der Haltevorrichtung voneinander beabstandet sind. Die zwei oder mehr Auslegequerträger sind vorzugsweise äquidistant angeordnet. Insbesondere ist es bevorzugt, dass der mindestens eine Auslegeabschnitt insgesamt vier Auslegequerträger umfasst. Die Auslegequerträger können in unmittelbarer, jedoch in gewinkelter Verlängerung eines Hauptquerträgers des Hauptabschnitts ausgebildet sein.

Eine weitere bevorzugte Fortbildung des Windenergieanlagen-Turmsegments sieht vor, dass der Hauptabschnitt einen Zentrallängsträger umfasst, dessen Zentrallängsträger-Längsrichtung parallel zur ersten Längsträger-Längsrichtung und/oder zur zweiten Längsträger-Längsrichtung ausgerichtet ist. Der Zentrallängsträger kann in Segment-Ringrichtung zwischen dem ersten Längsträger und dem zweiten Längsträger angeordnet sein und ist vorzugsweise mit dem Hauptquerträger verbunden. Darüber hinaus ist es bevorzugt, dass die Steigleiter an dem Zentrallängsträger und/oder an dem ersten Längsträger und/oder an dem zweiten Längsträger angeordnet ist. Der zweite Längsträger kann analog zum ersten Längsträger ausgebildet sein. Der Zentrallängsträger kann ebenfalls analog zum ersten Längsträger ausgebildet sein. Darüber hinaus ist es bevorzugt, dass der Zentrallängsträger ein rechteckiges Vollprofil aufweist. Die Haltevorrichtung besteht vorzugsweise aus Stahl oder umfasst diesen.

Gemäß einem weiteren Aspekt der vorliegenden Erfindung wird die eingangs genannte Aufgabe gelöst durch einen Windenergieanlagen-Turm umfassend mindestens ein Windenergieanlagen-Turmsegment nach mindestens einer der im Vorhergehenden beschriebenen Ausführungsvarianten.

Insbesondere ist es bevorzugt, dass der Windenergieanlagen-Turm neben dem mindestens einen Windenergieanlagen-Turmsegment ein weiteres Mantelsegment umfasst, welches in vertikaler Richtung des Windenergieanlagen-Turmes unter dem Windenergieanlagen-Turmsegment angeordnet ist. Unter bedeutet in diesem Zusammenhang insbesondere, dass das weitere Mantelsegment dem Fundament zugewandt ist und das Windenergieanlagen-Turmsegment dem Fundament abgewandt ist. Ferner ist es bevorzugt, dass das weitere Mantelsegment ein im Vorherigen beschriebenes Horizontallager umfasst, jedoch keine Kopplungsvorrichtung, die Kräfte in vertikaler Richtung aufnimmt. Somit wird sichergestellt, dass die Haltevorrichtung lediglich mit einem Mantelsegment gekoppelt ist und infolgedessen hängend in dem Windenergieanlagen-Turm angeordnet ist. Darüber hinaus ist es bevorzugt, dass das weitere Mantelsegment einen Schwingungsdämpfer aufweist und/oder das Horizontallager den Schwingungsdämpfer umfasst.

Darüber hinaus kann ein erstes Windenergieanlagen-Turmsegment und ein zweites Windenergieanlagen-Turmsegment von dem Windenergieanlagen-Turm umfasst werden. Insbesondere kann das erste Windenergieanlagen-Turmsegment in vertikaler Richtung über dem zweiten Windenergieanlagen-Turmsegment angeordnet sein. Die erste Haltevorrichtung des ersten Windenergieanlagen-Turmsegments und die zweite Haltevorrichtung des zweiten Windenergieanlagen-Turmsegments sind vorzugsweise in vertikaler Richtung voneinander beabstandet. Insbesondere ist eine derartige Beabstandung der ersten Haltevorrichtung von der zweiten Haltevorrichtung bevorzugt, dass eine Entkopplung der zwei Haltevorrichtungen gewährleistet ist. Ferner ist es bevorzugt, dass eine Steigleiter an der ersten Haltevorrichtung und an der zweiten Haltevorrichtung angeordnet ist. Die Steigleiter ist vorzugsweise derart an der ersten Haltevorrichtung und an der zweiten Haltevorrichtung angeordnet, dass diese auch bei etwaig entstehenden Schwingungen oder beispielsweise thermischen Ausdehnungen spannungsfrei angeordnet ist.

Gemäß einem weiteren Aspekt der vorliegenden Erfindung wird die eingangs genannte Aufgabe gelöst durch eine Windenergieanlage umfassend einen Windenergieanlagen-Turm nach mindestens einer der im Vorherigen beschriebenen Ausführungsvarianten.

Die eingangs genannte Aufgabe wird darüber hinaus gemäß dem Aspekt einer Verwendung einer Halteanordnung mit einer Haltevorrichtung und einer Kopplungsvorrichtung in einem Windenergieanlagen-Turmsegment zur Anordnung von Bedarfsmitteln, insbesondere von Kabeln, gelöst, wobei die Haltevorrichtung einen Hauptabschnitt und mindestens einen Auslegeabschnitt umfasst, der Hauptabschnitt und der mindestens eine Auslegeabschnitt in einer Segment-Ringrichtung des Windenergieanlagen-Turmsegments benachbart zueinander angeordnet sind, und der Hauptabschnitt und der mindestens eine Auslegeabschnitt einen Haltevorrichtungswinkel einschließen.

Gemäß einem weiteren Aspekt der vorliegenden Erfindung wird die eingangs genannte Aufgabe gelöst durch eine Verwendung einer ersten Transportvorrichtung zum Transportieren einer Haltevorrichtung, vorzugsweise mit Betriebsmittels, insbesondere Kabeln, wobei die erste Transportvorrichtung ein erstes Grundgestell mit einer ersten Gestelllängsrichtung, einer ersten Gestellbreite und einer ersten Gestellhöhe aufweist, die erste Gestellhöhe im Wesentlichen einer Erstreckung der Haltevorrichtung in radialer Richtung entspricht, und die Haltevorrichtung derart auf der ersten Transportvorrichtung aufliegt, dass eine der Symmetrieachse des Windenergieanlagen-Turmsegments zugewandte Seite eines Hauptabschnitts der Haltevorrichtung an der Transportvorrichtung angeordnet ist.

Die radiale Richtung der Haltevorrichtung ist als solche radiale Richtung zu verstehen, die im eingebauten Zustand der Haltevorrichtung in einem Windenergieanlagen-Turmsegment dessen radialer Richtung bzw. der radialen Richtung des Windenergieanlagen-Turmes, in dem die Haltevorrichtung eingebaut ist, entspricht. Das erste Grundgestell weist vorzugsweise mindestens einen Anschlagspunkt, beispielsweise in Form eines Bolzens mit Tellerabschluss, auf, welcher beispielsweise zum Drehen und/oder Heben des Gestells verwendet werden kann.

Insbesondere ist es bevorzugt, dass das erste Grundgestell sich in Gestell-Längsrichtung von einem ersten Ende zu einem zweiten Ende erstreckt, wobei der mindestens eine Anschlagspunkt in einem Abschnitt angrenzend an das erste Ende und/oder das zweite Ende angeordnet ist. Die Transportvorrichtung kann somit auf einer ebenen Fläche angeordnet werden und daraufhin die Haltevorrichtung auf der Transportvorrichtung angeordnet werden. Die Haltevorrichtung wird insbesondere derart an der Transportvorrichtung angeordnet, dass ein distales Ende und/oder eine distale Kante des Auslegeabschnitts der ebenen Fläche zugewandt ist bzw. sind und durch die erste Gestellhöhe gerade die ebene Fläche berührt. Infolgedessen kann die Haltevorrichtung im Wesentlichen spannungsfrei und/oder schadensfrei mittels der ersten Transportvorrichtung transportiert und/oder gelagert werden. Ferner ist durch die bedingte Transportlage der Haltevorrichtung der Einfluss einer Witterung gering.

Gemäß einem weiteren Aspekt der vorliegenden Erfindung wird die eingangs genannte Aufgabe gelöst durch eine Verwendung einer zweiten Transportvorrichtung zum Transportieren einer Haltevorrichtung, wobei die zweite Transportvorrichtung umfasst ein zweites Grundgestell mit einer zweiten Gestelllängsrichtung, einer zweiten Gestellbreite, und einer zweiten Gestellhöhe, wobei durch die zweite Gestelllängsrichtung und die zweite Gestellbreite eine Auflagerfläche ausgebildet wird, und eine erste Schulter, die erste Schulter mindestens abschnittsweise an einer parallel zur Gestelllängsrichtung ausgerichteten Kante des Grundgestells angeordnet ist, ein der Auflagerfläche abgewandtes, oberes Ende der Schulter von der Auflagerfläche mit einer Schulterbeabstandung beabstandet ist, wobei die Schulterbeabstandung im Wesentlichen der Erstreckung der Haltevorrichtung in radialer Richtung entspricht, die Haltevorrichtung derart auf der zweiten Transportvorrichtung aufliegt, vorzugsweise befestigt ist, dass eine der Symmetrieachse des Windenergieanlagen-Turmsegments abgewandte Seite eines Hauptabschnitts auf der Auflagerfläche angeordnet ist und ein dem Hauptabschnitt abgewandtes Ende des mindestens einen Auslegeabschnitts an dem oberen Ende der Schulter angeordnet, vorzugsweise befestigt, ist.

Die zweite Transportvorrichtung kann analog zur im Vorherigen beschriebenen ersten Transportvorrichtung Anschlagspunkte aufweisen. Die Haltevorrichtung wird mit ihrem Hauptabschnitt auf der Auflagerfläche angeordnet, und zwar derart, dass der mindestens eine Auslegeabschnitt nach oben von der Auflagefläche auskragt und mit einem Ende an dem oberen Ende der Schulter angeordnet ist. Infolgedessen wird die Haltevorrichtung ebenfalls im Wesentlichen spannungsfrei transportiert. Es wird deutlich, dass mittels der zweiten Transportvorrichtung die Haltevorrichtung im Gegensatz zum Transport mit der ersten Transportvorrichtung um 180 Bogengrad um ihre Längsachse gedreht transportiert bzw. gelagert wird. Die zweite Transportvorrichtung ist insbesondere dahingehend vorteilhaft, da sich die Haltevorrichtung bereits in einer Einbaulage befindet, in der diese in einem nachfolgenden Schritt an einem Mantelsegment angeordnet wird.

Gemäß einem weiteren Aspekt der vorliegenden Erfindung wird die eingangs genannte Aufgabe gelöst durch ein Verfahren zur Montage eines Windenergieanlagen-Turmsegments nach mindestens einer der im Vorherigen beschriebenen Ausführungsvarianten, umfassend Bereitstellen eines Mantelsegments, einer Haltevorrichtung und einer Kopplungsvorrichtung, wobei sich die Haltevorrichtung in einer Haupterstreckungsrichtung, in Breitenrichtung und in Dickenrichtung erstreckt, Anheben der Haltevorrichtung mittels mindestens drei Transportelementen, wobei die drei Transportelemente an einem Anschlagpunkt eines Hebemechanismus angeordnet sind, und die Transportelemente an mindestens drei Anschlagpunkten der Haltevorrichtung angeordnet sind, wobei mindestens zwei Anschlagpunkte in Haupterstreckungsrichtung der Haltevorrichtung beabstandet sind und mindestens zwei Anschlagpunkte in Breitenrichtung beabstandet sind, Anordnen der Haltevorrichtung an einer Innenumfangsfläche des Mantelsegments, Koppeln der Haltevorrichtung mit dem Mantelsegments mit der Kopplungsvorrichtung.

Darüber hinaus ist es bevorzugt, dass das im Vorhergehenden beschriebene Verfahren die Schritte umfasst Verfahren nach dem vorherigen Anspruch, umfassend Bereitstellen einer Traverse, wobei die mindestens drei Hebeelemente zwischen der Traverse und der Haltevorrichtung angeordnet sind, und die Hebeelemente an mindestens zwei Traversenanschlagpunkten an der Traverse angeordnet sind, wobei die zwei Traversenanschlagpunkte in einer Längsrichtung der Traverse voneinander beabstandet sind.

Gemäß einem weiteren Aspekt der vorliegenden Erfindung wird die eingangs genannte Aufgabe gelöst durch ein Verfahren zur Montage eines Windenergieanlagen-Turmabschnitts, umfassend Bereitstellen mindestens eines Windenergieanlagen-Turmsegments nach mindestens einer der im Vorherigen beschriebenen Ausführungsvarianten und mindestens eines zweiten Mantelsegments; Anordnen des mindestens einen Windenergieanlagen-Turmsegments und des mindestens einen zweiten Mantelsegments derart, dass diese an Vertikalstoßseiten aneinanderstoßen; vorzugsweise Befestigen des mindestens einen Windenergieanlagen-Turmsegments und des mindestens einen zweiten Mantelsegments aneinander.

Die erfindungsgemäßen Verfahren und Verwendungen sowie ihre möglichen Fortbildungen weisen Merkmale bzw. Verfahrensschritte auf, die sie insbesondere dafür geeignet machen, für ein erfindungsgemäßes Windenergieanlagen-Turmsegment und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Windenergieanlagen-Turmsegments verwiesen.

Bevorzugte Ausführungsformen der Erfindung werden beispielhaft anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische, dreidimensionale Ansicht einer beispielhaften Ausführungsform eines Windenergieanlagen-Turmes;
- Figur 3:: eine schematische, dreidimensionale Teilansicht eines Windenergieanlagen-Turmsegments des in Figur 2 gezeigten Windenergieanlagen-Turmes;
- Figur 4:: eine schematische, dreidimensionale Detailansicht des in Figur 3 gezeigten Windenergieanlagen-Turmsegments;
- Figur 5:: eine schematische, dreidimensionale Detailansicht eines Horizontallagers des in Figur 3 gezeigten Windenergieanlagen-Turmsegments;
- Figur 6:: eine schematische, dreidimensionale Ansicht eines Übergangs von einem ersten Windenergieanlagen-Turmsegment zu einem zweiten Windenergieanlagen-Turmsegment;
- Figur 7:: eine schematische, dreidimensionale Ansicht einer beispielhaften Ausführungsform einer Montagetraverse zum Transport einer Haltevorrichtung;
- Figur 8:: eine schematische, zweidimensionale Ansicht der in Figur 7 gezeigten Traverse mit transportiertem Windenergieanlagen-Turmsegment;
- Figur 9:: eine schematische, zweidimensionale Ansicht eines beispielhaften Montagevorgangs;
- Figur 10:: eine schematische, dreidimensionale Ansicht einer beispielhaften Ausführungsform einer ersten Transportvorrichtung;
- Figur 11:: eine schematische, dreidimensionale Ansicht eines Transports eines Windenergieanlagen-Turmsegments mittels der in Figur 10 gezeigten ersten Transportvorrichtung;
- Figur 12:: eine schematische, dreidimensionale Ansicht einer beispielhaften Ausführungsform einer zweiten Transportvorrichtung;
- Figur 13:: eine schematische, dreidimensionale Ansicht eines Transportvorgangs eines Windenergieanlagen-Turmsegments mit einer in Figur 12 gezeigten zweiten Transportvorrichtung.

In den Figuren sind gleiche oder im Wesentlichen funktionsgleiche bzw. -ähnliche Elemente mit den gleichen Bezugszeichen bezeichnet.

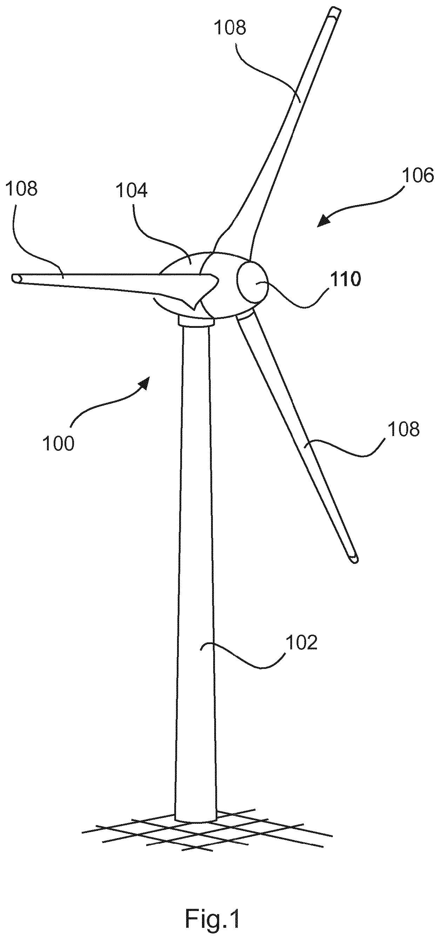

Figur 1 zeigt eine schematische dreidimensionale Ansicht einer beispielhaften Ausführungsform einer Windenergieanlage 100. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator an der Gondel 104 an. Der Turm 102 umfasst mindestens ein Windenergieanlagen-Turmsegment, das anhand der weiteren Figuren noch näher beschrieben wird, umfassend ein Mantelsegment, eine Haltevorrichtung und eine Kopplungsvorrichtung, wobei die Haltevorrichtung mittels der Kopplungsvorrichtung mit dem Mantelsegment gekoppelt ist.

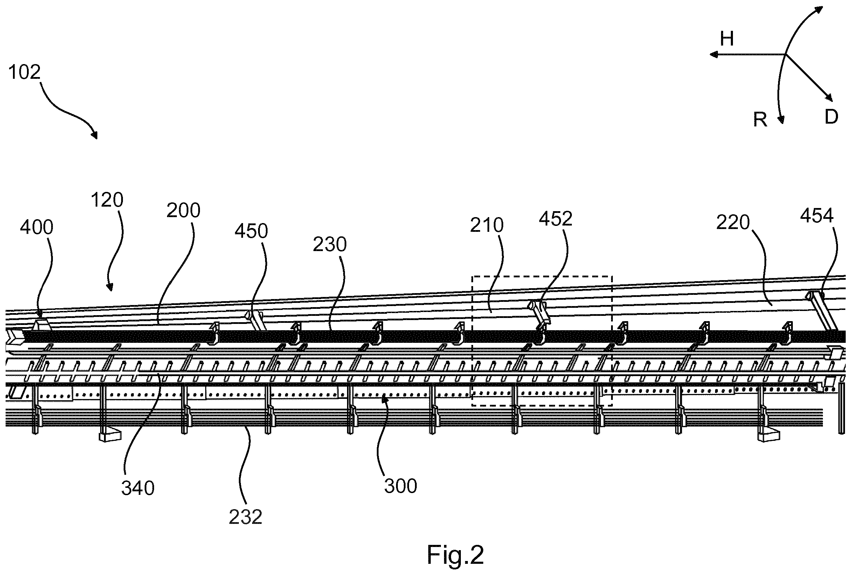

Figur 2 zeigt eine schematische, dreidimensionale Ansicht einer beispielhaften Ausführungsform eines Windenergieanlagen-Turmes 102. Der Windenergieanlagen-Turm 102 umfasst ein Windenergieanlagen-Turmsegment 120 mit einem ersten Mantelsegment 200, einem zweiten Mantelsegment 210 und einem dritten Mantelsegment 220. Das erste Mantelsegment 200 ist einer Turmspitze zugewandt. Das dritte Mantelsegment 220 ist einem Turmfundament zugewandt und der Turmspitze abgewandt. Das zweite Mantelsegment 210 ist zwischen dem ersten Mantelsegment 200 und dem dritten Mantelsegment 220 angeordnet.

Das Windenergieanlagen-Turmsegment 120 weist ferner eine Haltevorrichtung 300 auf, die an dem ersten Mantelsegment 200, dem zweiten Mantelsegment 210 und dem dritten Mantelsegment 220 angeordnet ist. Die Haltevorrichtung 300 ist insbesondere mittels einer Kopplungsvorrichtung 400 an dem ersten Mantelsegment 200 angeordnet, deren spezifische Ausbildung noch näher beschrieben wird. Das erste Mantelsegment 200 weist ferner ein erstes Horizontallager 450, das zweite Mantelsegment 210 ein zweites Horizontallager 452 und das dritte Mantelsegment 220 ein drittes Horizontallager 454 auf. Die Horizontallager 450, 452, 454 nehmen im Wesentlichen solche Kräfte auf, die orthogonal zu einer Segmenthöhe H wirken. Insbesondere werden solche Kräfte von den Horizontallagern 450, 452, 454 aufgenommen, die parallel zu einer Segment-Ringrichtung R und/oder zu einer Segmentdicke D wirken. Das erste Horizontallager 450 ist in einem Abschnitt angrenzend an die untere Horizontalstoßseite des Mantelsegments 200 angeordnet.

Die Haltevorrichtung 300 umfasst ferner eine Steigleiter 340, die mit ihrer Längsrichtung parallel zu einer Haupterstreckungsrichtung der Haltevorrichtung 300 angeordnet ist. Die Haltevorrichtung weist einen noch im weiteren Verlauf näher beschriebenen Hauptabschnitt und insgesamt zwei Auslegeabschnitte auf, wobei an einem ersten Auslegeabschnitt ein erster Kabelstrang 230 und an einem zweiten Auslegeabschnitt ein zweiter Kabelstrang 232 angeordnet ist.

Die Mantelsegmente 200, 210, 220 erstrecken sich mit ihren jeweiligen Haupterstreckungsrichtungen in Richtung der Segmenthöhe H. Darüber hinaus erstrecken sich die Mantelsegmente 200, 210, 220 in der Segment-Ringrichtung R. Des Weiteren erstrecken sich die Mantelsegmente 200, 210, 220 in Richtung der Segmentdicke D, welche auch als Stärke der Mantelsegmente 200, 210, 220 verstanden werden kann. Die Segment-Ringrichtung R ist lokal jeweils orthogonal zur Segmenthöhe H und zur Segmentdicke D ausgerichtet.

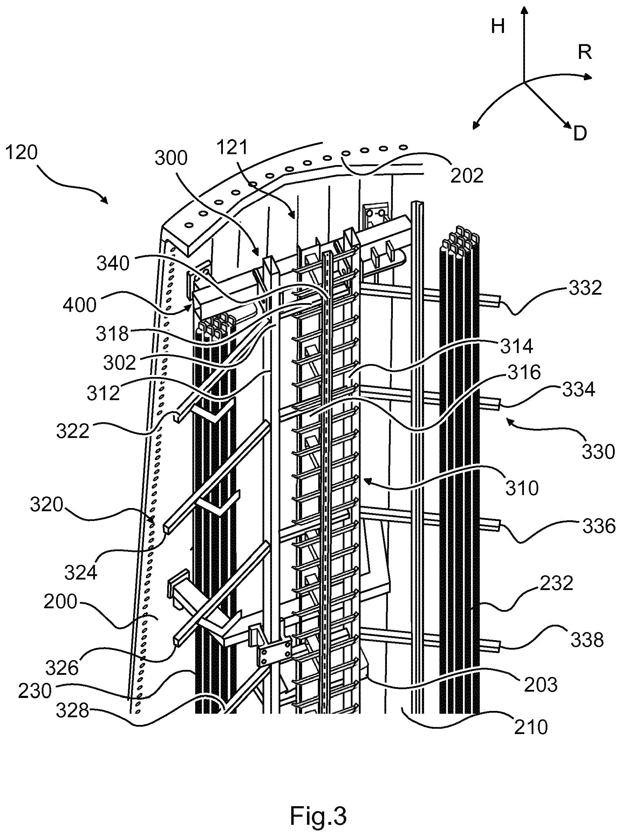

Das in Figur 3 gezeigte Windenergieanlagen-Turmsegment 120 erstreckt sich von einer oberen Horizontalstoßseite 202 zu einer nicht gezeigten, unteren Horizontalstoßseite. Das Windenergieanlagen-Turmsegment 120 weist einen Kopplungsabschnitt 121 auf, der angrenzend an die obere Horizontalstoßseite 202 angeordnet ist. In dem Kopplungsabschnitt 121 ist mittels der Kopplungsvorrichtung 400 das erste Mantelsegment 200 mit der Haltevorrichtung 300 gekoppelt. Die Kopplungsvorrichtung 400 ist insbesondere derart angeordnet und ausgebildet, durch die Haltevorrichtung 300 erzeugte Kräfte in Richtung der Segmenthöhe H aufzunehmen. Wie noch später beschrieben wird, ist die Haltevorrichtung 300 um eine Achse parallel zur Ringrichtung R beweglich angeordnet, wobei dies auch als eine hängende Anordnung bezeichnet werden kann.

Die Haltevorrichtung 300 umfasst einen Hauptabschnitt 310. Der Hauptabschnitt wird im Wesentlichen durch einen ersten Längsträger 312 und einen zweiten Längsträger 314 ausgebildet. Die Längsträger 312, 314 sind in Segment-Ringrichtung R voneinander beabstandet. Ferner sind die Längsträger 312, 314 parallel zueinander und parallel zur Segmenthöhe H angeordnet. Mittig zwischen dem ersten Längsträger 312 und dem zweiten Längsträger 314 in Segment-Ringrichtung R ist ein Zentral-Längsträger 316 angeordnet. Der Zentral-Längsträger 316 ist mit den Längsträgern 312, 314 über eine Mehrzahl von Hauptquerträgern 318 gekoppelt.

Die Haltevorrichtung 300 weist ferner einen ersten Auslegeabschnitt 320 und einen zweiten Auslegeabschnitt 330 auf. Der erste Auslegeabschnitt 320 ist an der Seite des Hauptabschnitts 310 benachbart angeordnet, an der der erste Längsträger 312 angeordnet ist. Der zweite Auslegeabschnitt 330 ist an der Seite benachbart zum Hauptabschnitt 310 angeordnet, an der der zweite Längsträger 314 angeordnet ist. Der erste Auslegeabschnitt 320 und der zweite Auslegeabschnitt 330 sind insbesondere derart angeordnet, dass der erste Auslegeabschnitt 320 an einer ersten Seite des Hauptabschnitts 310 und der zweite Auslegeabschnitt 330 an einer der ersten Seite gegenüberliegenden zweiten Seite des Hauptabschnitts 310 angeordnet ist.

Der erste Auslegeabschnitt 320 wird durch einen ersten Auslegequerträger 322, einen zweiten Auslegequerträger 324, einen dritten Auslegequerträger 326 und einen vierten Auslegequerträger 328 ausgebildet. Die Auslegequerträger 322-328 weisen eine Querträger-Längsrichtung auf, die orthogonal zur Längsrichtung der Längsträger 312, 314 ausgerichtet sind. Zwischen den Auslegequerträgern 322-328 und dem ersten Längsträger 312 ist somit im Wesentlichen ein rechter Winkel. Der erste Auslegeabschnitt 320 und der Hauptabschnitt 310 schließen einen Haltevorrichtungswinkel 302 ein.

Der zweite Auslegeabschnitt 330 wird im Wesentlichen durch einen fünften Auslegequerträger 332, einen sechsten Auslegequerträger 334, einen siebten Auslegequerträger 336 und einen achten Auslegequerträger 338 ausgebildet. Die Auslegequerträger 332-338 sind im Wesentlichen analog zu den Auslegequerträgern 322-328 ausgebildet. Die Auslegequerträger 322-328 sind im Wesentlichen äquidistant voneinander beabstandet. Die weiteren Auslegequerträger 332-338 sind im Wesentlichen ebenfalls äquidistant voneinander beabstandet.

In Bezug auf die Segmenthöhe H sind darüber hinaus der erste Auslegequerträger 322 und der fünfte Auslegequerträger 332 auf gleicher Höhe angeordnet. Ferner sind der zweite Auslegequerträger 324 und der sechste Auslegequerträger 334 in Bezug auf die Segmenthöhe H auf gleicher Höhe angeordnet. Gleiches gilt für den dritten Auslegequerträger 326 und den siebten Auslegequerträger 336 sowie für den vierten Auslegequerträger 328 und den achten Auslegequerträger 338. Ferner ist dargestellt, dass der erste Kabelstrang 230 an dem ersten Auslegeabschnitt 320 angeordnet ist. Insbesondere ist der erste Kabelstrang 230 mit Kabelkopplungselementen mit den Auslegequerträgern 322-328 verbunden. Analog ist an dem zweiten Auslegeabschnitt 330 der zweite Kabelstrang 232 angeordnet.

Die untere Horizontalstoßseite des ersten Mantelsegments 200 ist im Bereich der Fuge 203 verortet. An der Fuge 203 endet das erste Mantelsegment 200. In Richtung der Segmenthöhe H ist angrenzend an das erste Mantelsegment 200 das zweite Mantelsegment 210 angeordnet, wobei die Mantelsegmente 200, 210 an der Fuge 203 aneinanderstoßen.

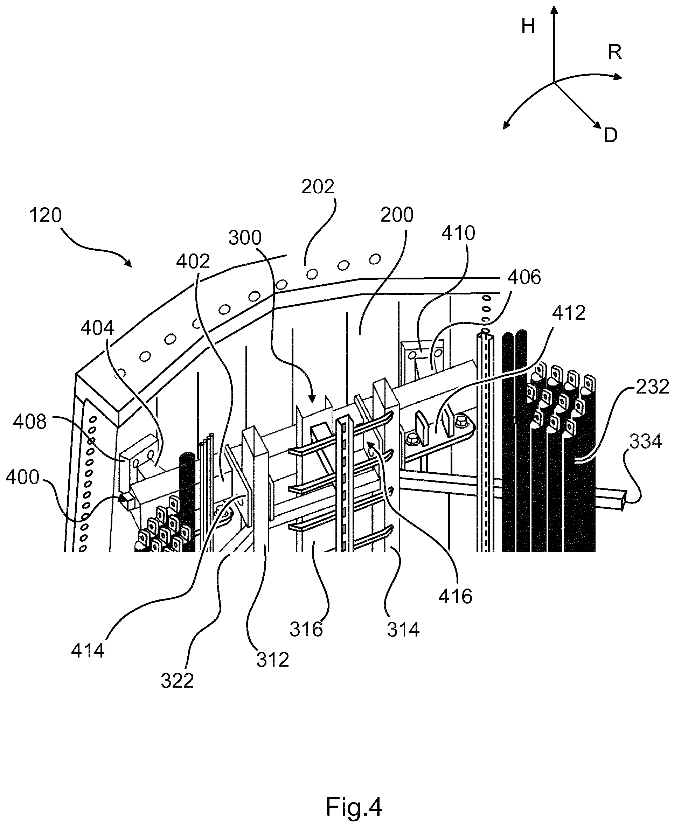

In Figur 4 ist eine Detailansicht der Kopplungsvorrichtung 400 gezeigt. Die Kopplungsvorrichtung 400 umfasst einen Kopplungsquerbalken 402, der mittels eines ersten Verbindungsstegs 404 und einer ersten Befestigungsplatte 408 sowie einem zweiten Verbindungssteg 406 und einer zweiten Befestigungsplatte 410 mit dem Mantelsegment 200 gekoppelt ist. Vorliegend sind die Befestigungsplatten 408, 410 an dem Mantelsegment 200 angeordnet. Die Verbindungsstege 404, 406 sind mittels einer Schraubverbindung mit den Befestigungsplatten 408, 410 und dem Mantelsegment 200 verbunden. Die Verbindungsstege 404, 406 kragen im Wesentlichen in Richtung der Segmentdicke D von einer Innenumfangsfläche des Mantelsegments 200 aus.

An dem zweiten Verbindungssteg 406 ist eine Auflagerplatte 412 angeordnet, wobei die Auflagerplatte 412 eine horizontale Auflagerfläche aufweist. An dem ersten Verbindungssteg 404 ist in analoger Weise eine nicht gezeigte Auflagerplatte angeordnet. Der Verbindungsquerbalken 402 liegt auf dieser horizontalen Auflagerfläche der Auflagerplatten 412 auf und wird somit in vertikaler Richtung durch die Verbindungsstege 404, 406 und die Auflagerplatten 412 gehalten.

Zwischen dem ersten Verbindungssteg 404 und dem zweiten Verbindungssteg 406 ist auf der dem Mantelsegment 200 abgewandten Seite des Kopplungsquerbalkens 402 eine erste Kopplungslasche 414 und eine zweite Kopplungslasche 416 angeordnet. Die Kopplungslaschen 414, 416 umfassen jeweils zwei vertikal ausgerichteten Platten, die voneinander beabstandet sind. Ferner weisen diese Platten jeweils eine Durchtrittsöffnung auf, die eine gemeinsame Durchtrittsachse aufweisen. Der erste Längsträger 312 ist zwischen den zwei Platten der ersten Kopplungslasche 414 angeordnet. Der zweite Längsträger 314 ist zwischen den zwei Platten der zweiten Kopplungslasche 416 angeordnet. Darüber hinaus weist der erste Längsträger 312 und der zweite Längsträger 314 jeweils eine Durchtrittsöffnung auf, die derart angeordnet und ausgebildet ist, dass jeweils ein Bolzen durch die Öffnungen der Kopplungslaschen 414, 416 und durch die der Längsträger hindurchgeführt werden kann. Infolgedessen wird eine sichere Befestigung der Haltevorrichtung 300 in Richtung der Segmenthöhe gewährleistet. Des Weiteren ist die Haltevorrichtung 300 hängend angeordnet, da diese um die Bolzenachsen schwingen kann.

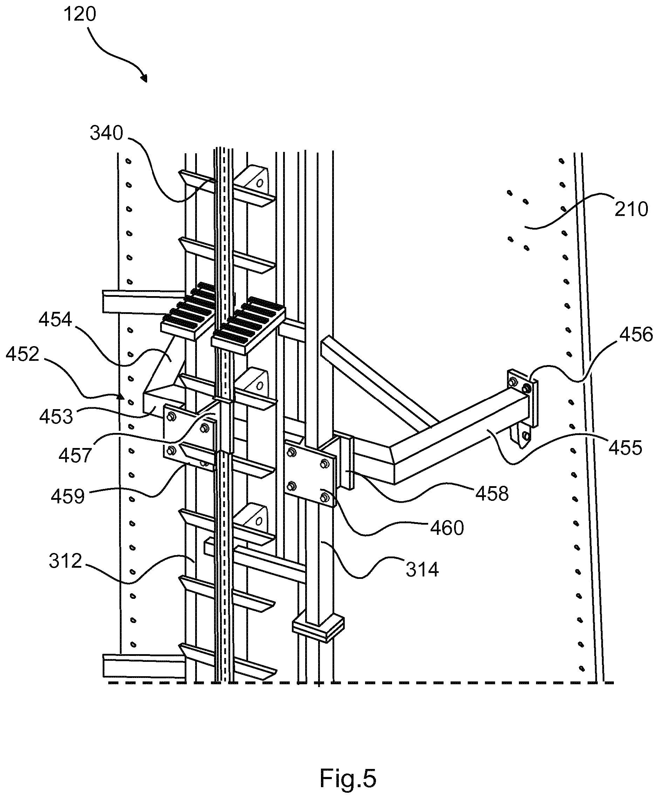

In Figur 5 ist die Ausbildung des zweiten Horizontallagers 452 gezeigt. Das Horizontallager 452 umfasst einen Lagerquerbalken 453 sowie eine erste Lagerverbindung 454 und eine zweite Lagerverbindung 455. Die erste Lagerverbindung 454 ist mit einem ersten Ende an dem Mantelsegment 210 und mit einem zweiten Ende an dem Lagerquerbalken 455 angeordnet. Die zweite Lagerverbindung 455 ist ebenfalls mit einem ersten Ende an dem Mantelsegment 210 und mit einem zweiten Ende an dem Lagerquerbalken 455 angeordnet. An dem ersten Ende ist die zweite Lagerverbindung 455 mittels einer Verbindungsplatte 456 und einer Schraubverbindung mit dem Mantelsegment 210 verbunden. Die erste Lagerverbindung 454 ist analog an dem Mantelsegment 210 angeordnet.

Die erste Lagerverbindung 454 und die zweite Lagerverbindung 455 erstrecken sich von dem Mantelsegment 210 in Richtung des Inneren von dem Mantelsegment 210 hinweg. Die dem Mantelsegment abgewandten, zweiten Enden der ersten Lagerverbindung 454 und der zweiten Lagerverbindung 455 sind mit dem Lagerquerbalken 453 verbunden.

An dem Lagerquerbalken 453 sind ein erstes Lagerelement 457 und ein zweites Lagerelement 458 angeordnet. Das erste Lagerelement 457 umfasst im Wesentlichen zwei vertikal ausgerichtete Platten, die derart angeordnet sind, dass zwischen diesen der erste Längsträger 312 angeordnet werden kann. Durch die zwei Platten des ersten Lagerelements 457 und durch den Lagerquerbalken 453 ist der erste Längsträger 312 von drei Seiten umschlossen.

Um ein Horizontallager auszubilden, ist die vierte Seite mittels einer ersten Lagerplatte 459 geschlossen. Die erste Lagerplatte 459 besteht vorzugsweise aus Kunststoff oder umfasst diesen. Dadurch kann beispielsweise eine Schwingungsdämpfung erreicht werden. Das zweite Lagerelement 458 ist analog zum ersten Lagerelement 457 ausgebildet und an der vierten Seite ist eine zweite Lagerplatte 460 angeordnet, die analog zur ersten Lagerplatte 459 ausgebildet sein kann. Somit kann mittels des Lagerquerbalkens 453, dem zweiten Lagerelement 458 und der zweiten Lagerplatte 460 eine vierseitige Umschließung des zweiten Längsträgers 314 erreicht werden. Das erste Lagerelement 457 und die erste Lagerplatte 459 sowie das zweite Lagerelement 458 und die zweite Lagerplatte 460 sind derart angeordnet und ausgebildet, Schwingungen orthogonal zur Segmenthöhe H und/oder Haupterstreckungsrichtung der Haltevorrichtung 300 zu dämpfen.

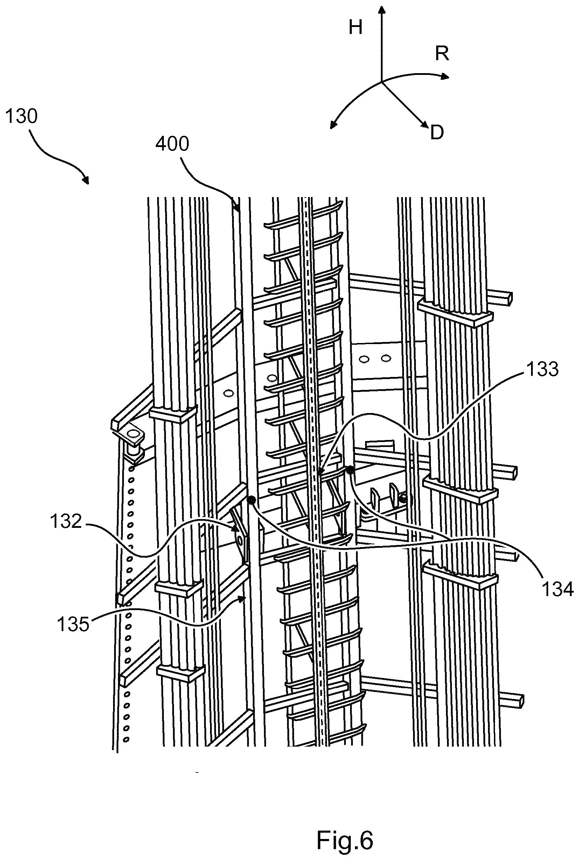

In der Figur 6 ist eine Übergangsstelle von dem Windenergieanlagen-Turmsegment 120 zu einem zweiten Windenergieanlagen-Turmsegment 130 gezeigt. Das zweite Windenergieanlagen-Turmsegment 130 weist eine zweite Haltevorrichtung 135 und eine zweite Kopplungsvorrichtung 132 auf. Die zweite Haltevorrichtung 135 ist an der zweiten Kopplungsvorrichtung 132 analog zur oben beschriebenen Anordnung der Haltevorrichtung 300 an der Kopplungsvorrichtung 400 angeordnet. Insbesondere ist der Übergangsbereich 133 von der Haltevorrichtung 300 zu der zweiten Haltevorrichtung 135 gezeigt, wobei die Verbindung der Haltevorrichtung 300 mit der zweiten Haltevorrichtung 135 an zwei Verbindungsstellen 134 realisiert ist. Vorzugsweise sind die Haltevorrichtungen 135, 300 derart miteinander verbunden, dass diese in Richtung der Segmenthöhe H ein Spiel aufweisen. Folglich können sich die Haltevorrichtungen 135, 300 in Richtung der Segmenthöhe H bewegen, vorzugsweise mit einem vordefinierten Spiel.

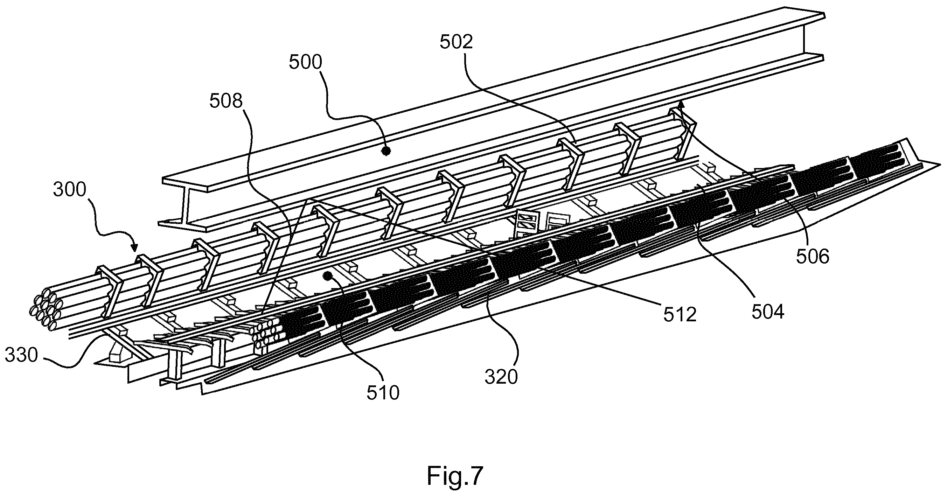

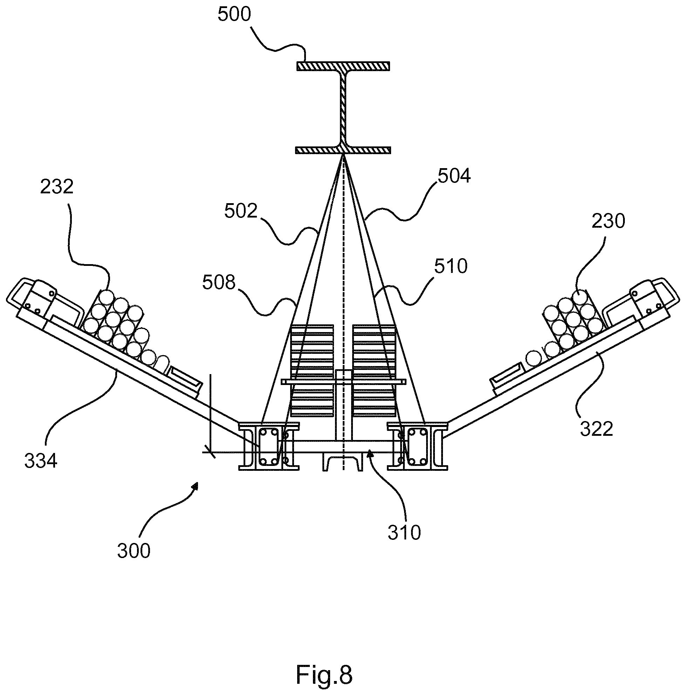

Die Figuren 7 und 8 zeigen eine schematische, dreidimensionale Ansicht einer beispielhaften Ausführungsform einer Montagetraverse 500 zum Transport einer Haltevorrichtung 300, die vorzugsweise vollständig vorausgerüstet mit Betriebsmitteln, insbesondere Kabeln ist. Die Haltevorrichtung 300 kann mittels der Montagetraverse 500 angehoben und bewegt werden. Zu diesem Zweck erstrecken sich von einem ersten Anknüpfungspunkt 506 an der Montagetraverse 500 ein erstes Hebeelement 502 und ein zweites Hebeelement 504 zu der Haltevorrichtung 300. Das erste Hebeelement 502 weist darüber hinaus einen Anknüpfungspunkt an der Haltevorrichtung 300 auf, der an der Seite des Hauptabschnitts angeordnet ist, an der der zweite Auslegeabschnitt 330 angeordnet ist. Das zweite Hebeelement 504 erstreckt sich von dem ersten Anknüpfungspunkt 506 zu einem Bereich des Hauptabschnitts der Haltevorrichtung 300, der auf der Seite angeordnet ist, an der der erste Auslegeabschnitt 320 angeordnet ist.

In Längsrichtung der Montagetraverse 500 ist beabstandet von dem ersten Anknüpfungspunkt 506 ein zweiter Anknüpfungspunkt 512 angeordnet. Ausgehend von dem ersten Anknüpfungspunkt 512 erstrecken sich ein drittes Hebeelement 508 und ein viertes Hebeelement 510 zu dem ersten Auslegeabschnitt 320 und zu dem zweiten Auslegeabschnitt 330 der Haltevorrichtung 300. Bei dieser Variante wird über die Montagetraverse 500 die Haltevorrichtung 300 an den zwei Anknüpfungspunkten 506, 512 angehoben und in eine Einbauposition gebracht. Das Mantelsegment ist vorzugsweise derart ausgerichtet, dass die Haltevorrichtung 300 waagerecht eingehoben werden kann. Die Anknüpfungspunkte 506, 512 weisen vorzugsweise eine maximale Lasteinleitung von 14 Kilonewton auf.

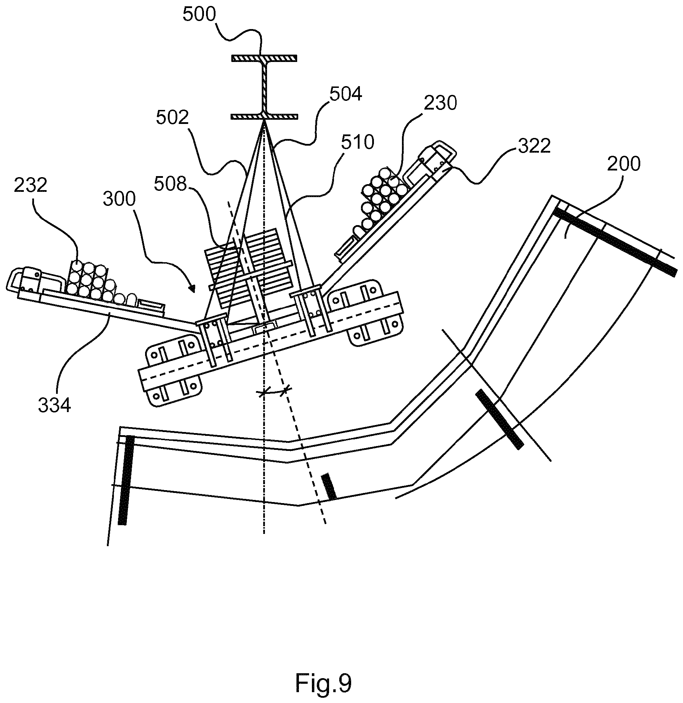

In Figur 9 ist eine Montage eines Windenergieanlagen-Turmsegments 120 gezeigt, in dem eine Haltevorrichtung 300 an einem ersten Mantelsegment 200 angeordnet wird. Vorliegend weisen die Hebeelemente 504, 510 eine kürzere Erstreckung auf als die Hebeelemente 502 und 508. Infolgedessen hängt die Haltevorrichtung 300 um einen definierten Winkel schräg unter der Montagetraverse 500. Somit kann eine Haltevorrichtung 300 auch an einem nicht mittig angeordneten Mantelsegment 200 angeordnet werden. Vorliegend ist das Mantelsegment 200 nicht derart ausgerichtet, dass die Haltevorrichtung 300 waagerecht eingehoben werden kann, sondern um 17 Bogengrad gedreht, wodurch die kürzere Erstreckung der Hebeelemente 504, 510 erforderlich wird, um die Haltevorrichtung analog zum Mantelsegment 200 zu drehen.

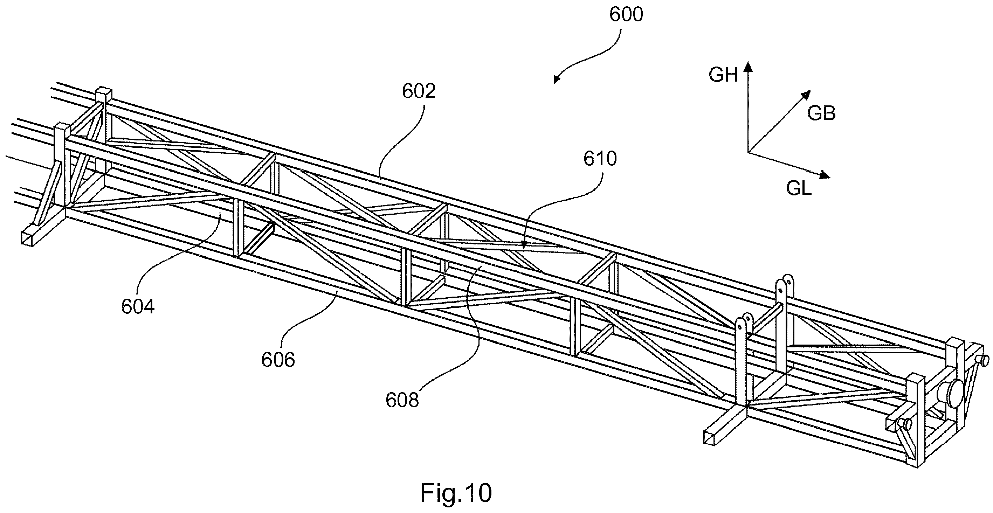

Figur 10 zeigt eine schematische, dreidimensionale Ansicht einer beispielhaften Ausführungsform einer ersten Transportvorrichtung. Die erste Transportvorrichtung 600 erstreckt sich in Gestell-Längsrichtung GL, in Gestellbreite GB und in Gestellhöhe GH. Orthogonal zur Gestell-Längsrichtung GL weist die erste Transportvorrichtung einen im Wesentlichen rechteckigen Querschnitt auf. Die erste Transportvorrichtung 600 wird im Wesentlichen durch einen ersten Gestellholm 602, einen zweiten Gestellholm 604, einen dritten Gestellholm 606 und einen vierten Gestellholm 608 gebildet. Die Gestellholme 602-608 verlaufen im Wesentlichen parallel zur Gestell-Längsrichtung GL. Darüber hinaus umfasst die erste Transportvorrichtung 600 Holme, die parallel zur Gestellhöhe oder parallel zur Gestellbreite ausgerichtet sind und die Gestellholme 602-608 miteinander verbinden. Darüber hinaus erstrecken sich zwischen den Gestellholmen 602-608 Querstreben 610.

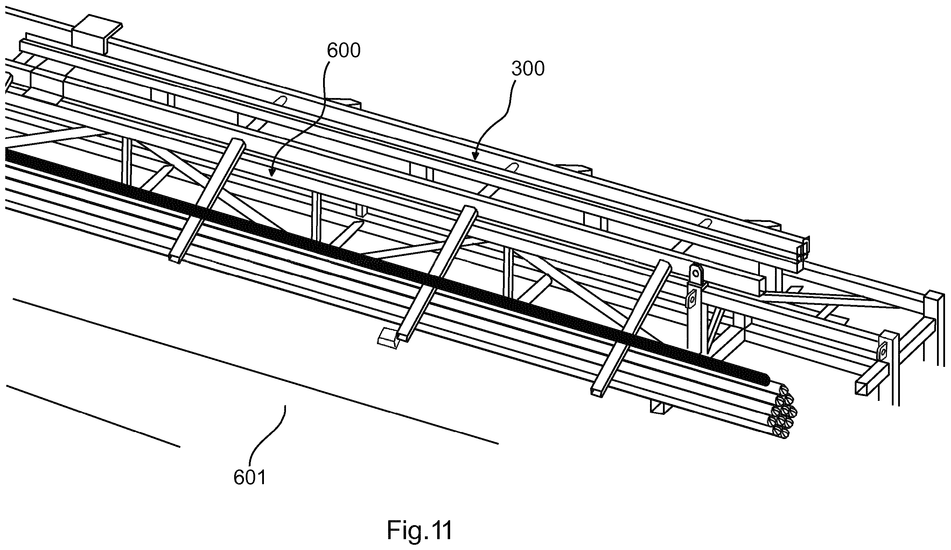

Wie in Figur 11 gezeigt, kann die erste Transportvorrichtung 600 auf einer Auflagerfläche 621 angeordnet werden. Im Anschluss kann eine Haltevorrichtung 300 insbesondere mit ihrem Hauptabschnitt auf der ersten Transportvorrichtung 600 angeordnet werden. Durch den Haltevorrichtungswinkel verlaufen die Auslegeabschnitte von dem auf der ersten Transportvorrichtung angeordneten Hauptabschnitt hin zu der Auflagerfläche 621. Somit kann die Haltevorrichtung 300 im Wesentlichen spannungsfrei auf der Auflagerfläche 621 angeordnet werden.

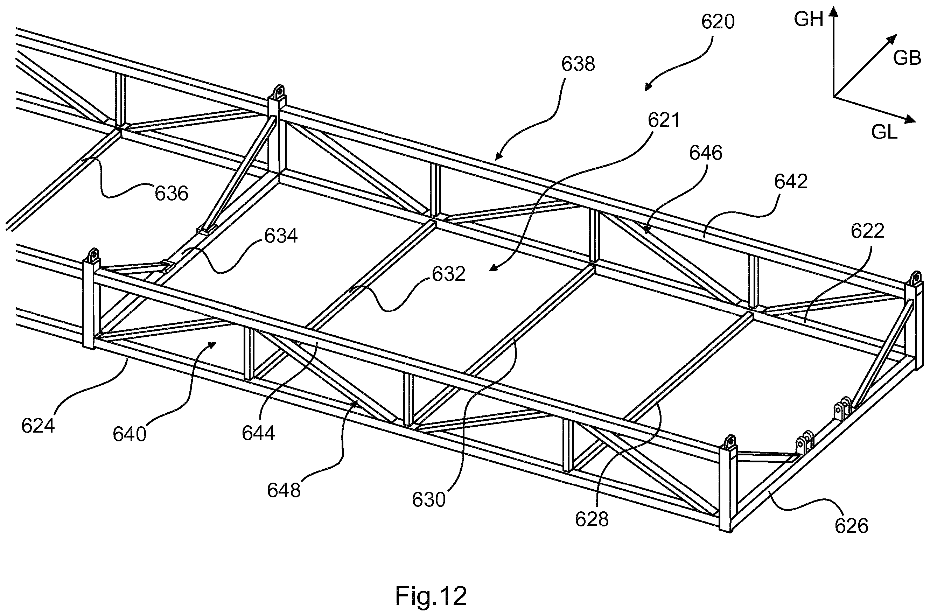

Figur 12 zeigt eine schematische, dreidimensionale Ansicht einer beispielhaften Ausführungsform einer zweiten Transportvorrichtung. Die zweite Transportvorrichtung 620 erstreckt sich in Gestell-Längsrichtung GL, in Gestellbreite GB und in Richtung der Gestellhöhe GH. In Richtung der Gestellbreite erstrecken sich ein erster Gestell-Querholm 626, ein zweiter Gestell-Querholm 628, ein dritter Gestell-Querholm 630, ein vierter Gestell-Querholm 632, ein fünfter Gestell-Querholm 634 und ein sechster Gestell-Querholm 636. Die Gestell-Querholme 626-636 erstrecken sich zwischen einem ersten Gestell-Längsholm 622 und einem zweiten Gestell-Längsholm 624. Die Gestell-Längsholme 622, 624 sind im Wesentlichen parallel zur Gestell-Längsrichtung GL ausgerichtet.

In Richtung der Gestellhöhe GH ist von dem ersten Gestell-Längsholm 622 ein erster Schulter-Längsholm 642 angeordnet. Zwischen dem ersten Gestell-Längsholm 622 und dem ersten Schulter-Längsholm 642 sind Holme zur Beabstandung angeordnet. Durch den ersten Schulter-Längsholm 642, eine erste Querverstrebung 646 und die im Vorherigen genannten Holme zur Verbindung des ersten Gestell-Längsholms 622 und des ersten Schulter-Längsholms 642 wird eine erste Gestellschulter 638 gebildet. Ebenfalls in Richtung der Gestellhöhe GH beabstandet ist der zweite Schulter-Längsholm 644 von dem zweiten Gestell-Längsholm 624. Darüber hinaus ist zwischen dem zweiten Gestell-Längsholm 624 und dem zweiten Schulter-Längsholm 644 eine zweite Querverstrebung 648 angeordnet, sodass diese Elemente analog zur ersten Gestellschulter 638 eine zweite Gestellschulter 640 ausbilden.

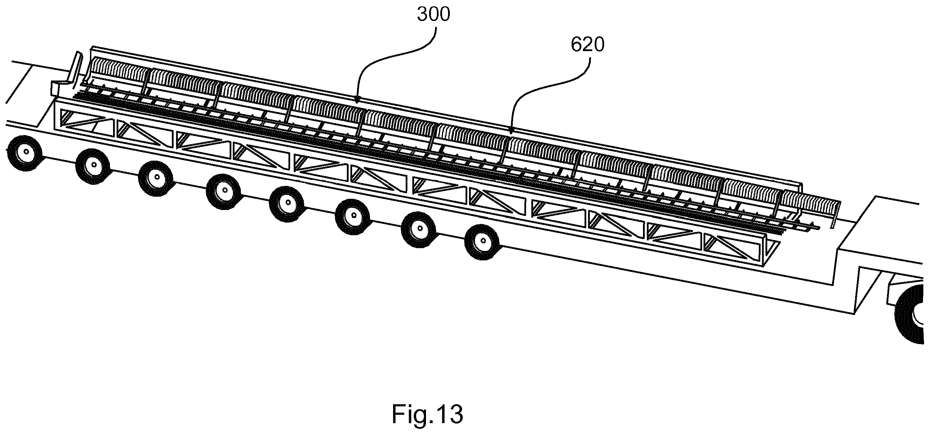

Durch die Gestell-Längsholme 622, 624 und die Gestell-Querholme 626-636 wird eine nicht geschlossene Auflagerfläche 621 ausgebildet. Auf diese Auflagerfläche 621 kann, wie in Figur 13 gezeigt, eine Haltevorrichtung 300 angeordnet werden. Durch den Haltevorrichtungswinkel erstrecken sich die zwei Auslegeabschnitte teilweise nach oben hinweg und können auf der ersten Gestellschulter 638 bzw. der zweiten Gestellschulter 640 abgelegt werden. Infolgedessen kann die Haltevorrichtung 300 auch auf der zweiten Transportvorrichtung 620 im Wesentlichen spannungsfrei abgelegt werden.

Ein Windenergieanlagen-Turmsegment 120 hat den besonderen Vorteil, dass dieses kostengünstig bereits vor Montage eines Windenergieanlagen-Turmes 102 vormontiert werden kann, indem die Haltevorrichtung 300 zumindest an dem ersten Mantelsegment 200 angeordnet wird. Die Vormontage kann beispielsweise im Werk oder an dem Aufstellort des Windenergieanlagen-Turmes 102 erfolgen. Darüber hinaus zeichnet sich die Ausgestaltung der Haltevorrichtung 300 dadurch vorteilhaft aus, dass diese innerhalb eines Turmes lediglich einen geringen Raumbedarf aufweist. Dies wird durch den Hauptabschnitt 310 und den Haltevorrichtungswinkel 302 zwischen dem Hauptabschnitt und dem ersten Auslegeabschnitt 320 und dem zweiten Auslegeabschnitt 330 realisiert.

Des Weiteren können an dem ersten Auslegeabschnitt 320 und dem zweiten Auslegeabschnitt 330 besonders vorteilhaft Kabelstränge 230, 232 angeordnet werden. Insbesondere zur Montage der Kabelstränge 230, 232 an den Auslegeabschnitten 320, 330 ist keine zusätzliche Montageplattform im Inneren des Windenergieanlagen-Turmes 102 notwendig. Darüber hinaus kann die Haltevorrichtung 300 derart angeordnet werden, insbesondere durch entsprechend weit auskragende Lagerverbindungen 454, 455, dass ein Monteur, der sich auf der Haltevorrichtung 300 befindet, nicht über Kopf arbeiten muss.

### BEZUGSZEICHEN

- 100: Windenergieanlage
- 102: Turm
- 104: Gondel
- 106: Rotor
- 108: Rotorblätter
- 110: Spinner
- 120, 130: Windenergieanlagen-Turmsegment
- 121: Kopplungsabschnitt
- 132, 400: Kopplungsvorrichtung
- 133: Übergangsbereich
- 134: Verbindungsstelle
- 135, 300: Haltevorrichtung
- 200: erstes Mantelsegment
- 202: obere Horizontalstoßseite
- 203: Fuge
- 210: zweites Mantelsegment
- 220: drittes Mantelsegment
- 230: erster Kabelstrang
- 232: zweiter Kabelstrang
- 302: Haltevorrichtungswinkel
- 310: Hauptabschnitt
- 312: erster Längsträger
- 314: zweiter Längsträger
- 316: Zentrallängsträger
- 318: Hauptquerträger
- 320: erster Auslegeabschnitt
- 322: erster Auslegequerträger
- 324: zweiter Auslegequerträger
- 326: dritter Auslegequerträger
- 328: vierter Auslegequerträger
- 330: zweiter Auslegeabschnitt
- 332: fünfter Auslegequerträger
- 334: sechster Auslegequerträger
- 336: siebter Auslegequerträger
- 338: achter Auslegequerträger
- 340: Steigleiter
- 402: Kopplungsquerbalken
- 404: erster Verbindungssteg
- 406: zweiter Verbindungssteg
- 408: erste Befestigungsplatte
- 410: zweite Befestigungsplatte
- 412: Auflagerplatte
- 414: erste Kopplungslasche
- 416: zweite Kopplungslasche
- 450, 452, 454: Horizontallager
- 453: Lagerquerbalken
- 454: erste Lagerverbindung
- 455: zweite Lagerverbindung
- 456: Verbindungsplatte
- 457: erstes Lagerelement
- 458: zweites Lagerelement
- 459: erste Lagerplatte
- 460: zweite Lagerplatte
- 500: Montagetraverse
- 502: erstes Hebeelement
- 504: zweites Hebeelement
- 506: erster Anknüpfungspunkt
- 508: drittes Hebeelement
- 510: viertes Hebeelement
- 512: zweiter Anknüpfungspunkt
- 600: erste Transportvorrichtung
- 601: Auflagerfläche
- 602: erster Gestellholm
- 604: zweiter Gestellholm
- 606: dritter Gestellholm
- 608: vierter Gestellholm
- 610: Querstreben
- 620: zweite Transportvorrichtung
- 621: Auflagerfläche
- 622: erster Gestelllängsholm
- 624: zweiter Gestelllängsholm
- 626: erster Gestellquerholm
- 628: zweiter Gestellquerholm
- 630: dritter Gestellquerholm
- 632: vierter Gestellquerholm
- 634: fünfter Gestellquerholm
- 636: sechster Gestellquerholm
- 638: erste Gestellschulter
- 640: zweite Gestellschulter
- 642: erster Schulterlängsholm
- 644: zweiter Schulterlängsholm
- 646: erste Querverstrebung
- 648: zweite Querverstrebung
- D: Segmentdicke
- GB: Gestellbreite
- GH: Gestellhöhe
- GL: Gestelllängsrichtung
- H: Segmenthöhe
- R: Segment-Ringrichtung

## Patentansprüche

1. Windenergieanlagen-Turmsegment (120, 130) für einen Windenergieanlagen-Turm, umfassend
- ein Mantelsegment, mit
o einer Erstreckung in Richtung einer Segmenthöhe (H), einer Segment-Ringrichtung (R) und einer Segmentdicke (D), und
o einer oberen Horizontalstoßseite (202) und einer unteren Horizontalstoßseite,
- eine Haltevorrichtung (135, 300) zur Anordnung von Bedarfsmitteln im Inneren eines Windenergieanlagen-Turmes, mit
o einem Hauptabschnitt (310), und
o mindestens einem Auslegeabschnitt,
o wobei der Hauptabschnitt (310) und der mindestens eine Auslegeabschnitt in Segment-Ringrichtung (R) benachbart zueinander angeordnet sind,
o wobei der Hauptabschnitt (310) und der mindestens eine Auslegeabschnitt einen Haltevorrichtungswinkel (302) einschließen,
- eine Kopplungsvorrichtung (132, 400), die in einem Kopplungsabschnitt (121) des Mantelsegments angrenzend an die obere Horizontalstoßseite (202) angeordnet ist,
- wobei die Haltevorrichtung (135, 300) mittels der Kopplungsvorrichtung (132, 400) mit dem Mantelsegment gekoppelt ist,
- **gekennzeichnet durch** ein Horizontallager (450, 452, 454), das in einem Lagerabschnitt angrenzend an die untere Horizontalstoßseite des Mantelsegments angeordnet ist, wobei die Haltevorrichtung (135, 300) mittels des Horizontallagers (450, 452, 454) gelagert ist.

2. Windenergieanlagen-Turmsegment (120, 130) gemäß dem vorhergehenden Anspruch,
- wobei das Horizontallager (450, 452, 454) angeordnet und ausgebildet ist, als Festlager für Lagerkräfte orthogonal zur Segmenthöhe (H) und/oder zu einer Haupterstreckungsrichtung der Haltevorrichtung (135, 300) zu wirken und/oder vorzugsweise als Loslagerfür Lagerkräfte in Richtung der Segmenthöhe (H) und/oder Haupterstreckungsrichtung der Haltevorrichtung (135, 300).

3. Windenergieanlagen-Turmsegment (120, 130) gemäß mindestens einem der vorhergehenden Ansprüche, wobei
- die Kopplungsvorrichtung (132, 400) angeordnet und ausgebildet ist, bei bestimmungsgemäßer Anordnung des Windenergieanlagen-Turmsegments (120, 130) die Haltevorrichtung (135, 300) derart mit dem Mantelsegment zu koppeln, dass die Haupterstreckungsrichtung der Haltevorrichtung (135, 300) im Wesentlichen vertikal ausgerichtet ist, und/oder
- die Kopplungsvorrichtung (132, 400) an der Haltevorrichtung (135, 300) angeordnet und ausgebildet ist, als Festlager für Kräfte in Richtung der Segmenthöhe (H) und/oder der Haupterstreckungsrichtung der Haltevorrichtung (135, 300) zu wirken.

4. Windenergieanlagen-Turmsegment (120, 130) gemäß mindestens einem der vorhergehenden Ansprüche,
- umfassend einen Schwingungsdämpfer, wobei der Schwingungsdämpfer angeordnet und ausgebildet ist, Schwingungen orthogonal zur Segmenthöhe (H) und/oder Haupterstreckungsrichtung der Haltevorrichtung (135, 300) zu dämpfen,
- wobei vorzugsweise das Horizontallager (450, 452, 454) den Schwingungsdämpfer umfasst und/oder vorzugsweise das Horizontallager (450, 452, 454) den Schwingungsdämpfer ausbildet,
- wobei vorzugsweise der Schwingungsdämpfer durch ein, zwei oder mehrere ein-, zwei- oder mehrseitig an der Haltevorrichtung (135, 300) anliegendes Element bzw. anliegende Elemente, insbesondere eine Platte bzw. zwei oder mehr Platten, beispielsweise aus Kunststoff, ausgebildet ist.

5. Windenergieanlagen-Turmsegment (120, 130) gemäß mindestens einem der vorhergehenden Ansprüche, wobei an dem Hauptabschnitt (310), eine Steigleiter (340) angeordnet ist.

6. Windenergieanlagen-Turmsegment (120, 130) gemäß mindestens einem der vorhergehenden Ansprüche, umfassend einen ersten Auslegeabschnitt (320) und einen zweiten Auslegeabschnitt (330), wobei der erste Auslegeabschnitt (320) an einer ersten Seite des Hauptabschnitts (310) und der zweite Auslegeabschnitt (330) an einer der ersten Seite gegenüberliegenden zweiten Seite des Hauptabschnitts (310) angeordnet ist.

7. Windenergieanlagen-Turmsegment (120, 130) gemäß mindestens einem der vorhergehenden Ansprüche, umfassend mindestens ein Kabel,
- wobei das Kabel an dem mindestens einen Auslegeabschnitt angeordnet ist, und
- vorzugsweise von dem Hauptabschnitt (310) weniger als 1,5 Meter und/oder weniger als 1,25 Meter und/oder weniger als 1 Meter und/oder weniger als 0,75 Meter und/oder weniger als 0,5 Meter beabstandet ist.

8. Windenergieanlagen-Turmsegment (120, 130) gemäß mindestens einem der vorhergehenden Ansprüche, wobei
- der Haltevorrichtungswinkel (302) kleiner 170 Bogengrad, und/oder kleiner 165 Bogengrad, und/oder kleiner 160 Bogengrad, und/oder kleiner 155 Bogengrad, und/oder kleiner 150 Bogengrad, und/oder kleiner 145 Bogengrad ist.

9. Windenergieanlagen-Turmsegment (120, 130) gemäß mindestens einem der vorhergehenden Ansprüche, wobei
- das Mantelsegment eine Symmetrieachse aufweist,
- sich die Haltevorrichtung (135, 300) von einem oberen Halteende zu einem unteren Halteende erstreckt, und
- die Haltevorrichtung (135, 300) derart an dem Mantelsegment angeordnet ist, dass ein erster Achsabstand zwischen der Symmetrieachse und dem oberen Halteende größer ist als ein zweiter Achsabstand zwischen der Symmetrieachse und dem unteren Halteende.

10. Windenergieanlagen-Turm umfassend mindestens ein Windenergieanlagen-Turmsegment (120, 130) nach mindestens einem der Ansprüche 1-9.

11. Windenergieanlage (100) umfassend einen Windenergieanlagen-Turm nach dem vorhergehenden Anspruch.

12. Verwendung einer Halteanordnung mit einer Haltevorrichtung (135, 300) und einer Kopplungsvorrichtung (132, 400) in einem Windenergieanlagen-Turmsegment (120, 130) nach mindestens einem der Ansprüche 1-9 zur Anordnung von Bedarfsmitteln, insbesondere von Kabeln, wobei
- die Haltevorrichtung (135, 300) einen Hauptabschnitt (310) und mindestens einen Auslegeabschnitt umfasst,
- der Hauptabschnitt (310) und der mindestens eine Auslegeabschnitt in einer Segment-Ringrichtung (R) des Windenergieanlagen-Turmsegments (120, 130) benachbart zueinander angeordnet sind, und
- der Hauptabschnitt (310) und der mindestens eine Auslegeabschnitt einen Haltevorrichtungswinkel (302) einschließen.

13. Verfahren zur Montage eines Windenergieanlagen-Turmsegments nach mindestens einem der Ansprüche 1-9, umfassend
- Bereitstellen eines Mantelsegments, einer Haltevorrichtung (135, 300) und einer Kopplungsvorrichtung (132, 400),
- wobei sich die Haltevorrichtung (135, 300) in einer Haupterstreckungsrichtung, in Breitenrichtung und in Dickenrichtung erstreckt,
- Anheben der Haltevorrichtung (135, 300) mittels mindestens drei Transportelementen, wobei
o die drei Transportelemente an einem Anschlagpunkt eines Hebemechanismus angeordnet sind, und
o die Transportelemente an mindestens drei Anschlagpunkten der Haltevorrichtung (135, 300) angeordnet sind, wobei mindestens zwei Anschlagpunkte in Haupterstreckungsrichtung der Haltevorrichtung (135, 300) beabstandet sind und mindestens zwei Anschlagpunkte in Breitenrichtung beabstandet sind,
- Anordnen der Haltevorrichtung (135, 300) an einer Innenumfangsfläche des Mantelsegments,
- Koppeln der Haltevorrichtung (135, 300) mit dem Mantelsegments mit der Kopplungsvorrichtung (132, 400).

14. Verfahren nach dem vorherigen Anspruch, umfassend
- Bereitstellen einer Traverse, wobei
- die mindestens drei Hebeelemente zwischen der Traverse und der Haltevorrichtung (135, 300) angeordnet sind, und
- die Hebeelemente an mindestens zwei Traversenanschlagpunkten an der Traverse angeordnet sind, wobei die zwei Traversenanschlagpunkte in einer Längsrichtung der Traverse voneinander beabstandet sind.

15. Verfahren zur Montage eines Windenergieanlagen-Turmabschnitts, umfassend
- Bereitstellen mindestens eines Windenergieanlagen-Turmsegments (120, 130) nach mindestens einem der Ansprüche 1-9 und mindestens eines zweiten Mantelsegments (210);
- Anordnen des mindestens einen Windenergieanlagen-Turmsegments (120, 130) und des mindestens einen zweiten Mantelsegments (210) derart, dass diese an Vertikalstoßseiten aneinanderstoßen;
- vorzugsweise Befestigen des mindestens einen Windenergieanlagen-Turmsegments (120, 130) und des mindestens einen zweiten Mantelsegments (210) aneinander.

## Claims

1. A wind-power-installation tower segment (120, 130) for a wind-power-installation tower, comprising
- a shell segment, having
o an extent in the direction of a segment height (H), a segment ring direction (R) and a segment thickness (D), and
o an upper horizontal abutment side (202) and a lower horizontal abutment side,
- a holding device (135, 300) for arranging requisites inside a wind-power-installation tower segment, having
∘ a main section (310), and
o at least one projecting section,
o wherein the main section (310) and the at least one projecting section are arranged adjacently to each other in the segment ring direction (R),
o wherein the main section (310) and the at least one projecting section enclose a holding-device angle (302),
- a coupling device (132, 400), which is arranged in a coupling section (121) of the shell segment, adjoining the upper horizontal abutment side (202),
- wherein the holding device (135, 300) is coupled to the shell segment by means of the coupling device (132, 400)
**characterized by** a horizontal bearing (450, 452, 454), which is arranged in a bearing section, adjoining the lower horizontal abutment side of the shell segment, wherein the holding device (135, 300) is supported by means of the horizontal bearing (450, 452, 454).

2. The wind-power-installation tower segment (120, 130) as claimed in the preceding claim,
- wherein the horizontal bearing (450, 452, 454) is arranged and configured to act as a fixed bearing for bearing forces orthogonal to the segment height (H) and/or to a direction of main extent of the holding device (135, 300), and/or preferably as a loose bearing for bearing forces in the direction of the segment height (H) and/or direction of main extent of the holding device (135, 300).

3. The wind-power-installation tower segment (120, 130) as claimed in at least one of the preceding claims, wherein
- the coupling device (132, 400) is arranged and configured, in the case of proper arrangement of the wind-power-installation tower segment (120, 130), to couple the holding device (135, 300) to the shell segment in such a manner that the direction of main extent of the holding device (135, 300) is oriented substantially vertically, and/or
- the coupling device (132, 400) is arranged and configured on the holding device (135, 300) to act as a fixed bearing for forces in the direction of the segment height (H) and/or the direction of main extent of the holding device (135, 300).

4. The wind-power-installation tower segment (120, 130) as claimed in at least one of the preceding claims,
- comprising a vibration damper, wherein the vibration damper is arranged and configured to damp vibrations orthogonal to the segment height (H) and/or direction of main extent of the holding device (135, 300),
- wherein preferably the horizontal bearing (450, 452, 454) comprises the vibration damper and/or preferably the horizontal bearing (450, 452, 454) constitutes the vibration damper,
- wherein preferably the vibration damper is constituted by an element, or two or more elements, in particular a plate, or two or more plates, for example of plastic, bearing against the holding device (135, 300) on one, two or more sides.

5. The wind-power-installation tower segment (120, 130) as claimed in at least one of the preceding claims, wherein there is a ladder (340) arranged on the main section (310).

6. The wind-power-installation tower segment (120, 130) as claimed in at least one of the preceding claims, comprising a first projecting section (320) and a second projecting section (330), wherein the first projecting section (320) is arranged on a first side of the main section (310), and the second projecting section (330) is arranged on a second side of the main section (310) that is opposite the first side.

7. The wind-power-installation tower segment (120, 130) as claimed in at least one of the preceding claims, comprising at least one cable,
- wherein the cable is arranged on the at least one projecting section, and
- is preferably spaced less than 1.5 meters and/or less than 1.25 meters and/or less than 1 meter and/or less than 0.75 meter and/or less than 0.5 meter from the main section (310).

8. The wind-power-installation tower segment (120, 130) as claimed in at least one of the preceding claims, wherein
- the holding-device angle (302) is less than 170 degrees of arc, and/or less than 165 degrees of arc, and/or less than 160 degrees of arc, and/or less than 155 degrees of arc, and/or less than 150 degrees of arc, and/or less than 145 degrees of arc.

9. The wind-power-installation tower segment (120, 130) as claimed in at least one of the preceding claims, wherein
- the shell segment has an axis of symmetry,
- the holding device (135, 300) extends from an upper holding end to a lower holding end, and
- the holding device (135, 300) is arranged on the shell segment in such a manner that a first axial distance between the axis of symmetry and the upper holding end is greater than a second axial distance between the axis of symmetry and the lower holding end.

10. A wind-power-installation tower comprising at least one wind-power-installation tower segment (120, 130) as claimed in at least one of claims 1-9.

11. A wind power installation (100) comprising a wind-power-installation tower as claimed in the preceding claim.

12. A use of a holding arrangement, having a holding device (135, 300) and a coupling device (132, 400), in a wind-power-installation tower segment (120, 130) as claimed in at least one of claims 1-9 for the arranging of requisites, in particular cables, wherein
- the holding device (135, 300) comprises a main section (310) and at least one projecting section,
- the main section (310) and the at least one projecting section are arranged adjacently to each other in a segment ring direction (R) of the wind-power-installation tower segment (120, 130), and
- the main section (310) and the at least one projecting section enclose a holding-device angle (302).

13. A method for assembling a wind-power-installation tower segment as claimed in at least one of claims 1-9, comprising
- providing a shell segment, a holding device (135, 300) and a coupling device (132, 400),
- wherein the holding device (135, 300) extends in a direction of main extent, in a width direction and in a thickness direction,
- raising the holding device (135, 300) by means of at least three transport elements, wherein
∘ the three transport elements are arranged at a fastening point of a lifting mechanism, and
∘ the transport elements are arranged at at least three fastening points of the holding device (135, 300), wherein at least two fastening points are spaced in a direction of main extent of the holding device (135, 300), and at least two fastening points are spaced in a width direction,
- arranging the holding device (135, 300) on an inner circumferential surface of the shell segment,
- coupling the holding device (135, 300) to the shell segment by means of the coupling device (132, 400).

14. The method as claimed in the preceding claim, comprising
- providing a crosshead, wherein
- the at least three lifting elements are arranged between the crosshead and the holding device (135, 300), and
- the lifting elements are arranged on the crosshead, at at least two crosshead fastening points, wherein the two crosshead fastening points are spaced from each other in a longitudinal direction of the crosshead.

15. A method for assembling a wind-power-installation tower section, comprising
- providing at least one wind-power-installation tower segment (120, 130) as claimed in at least one of claims 1-9, and at least one second shell segment (210);
- arranging the at least one wind-power-installation tower segment (120, 130) and the at least one second shell segment (210) in such a manner that they abut against each other at vertical abutment sides;
- preferably fastening the at least one wind-power-installation tower segment (120, 130) and the at least one second shell segment (210) to each other.

## Revendications

1. Segment de tour d'éolienne (120, 130) pour une tour d'éolienne comprenant
- un segment d'enveloppe, avec
∘ une extension en direction d'une hauteur de segment (H), une direction de bague de segment (R) et une épaisseur de segment (D), et
∘ un côté d'aboutement horizontal supérieur (202) et un côté d'aboutement horizontal inférieur,
- un dispositif de maintien (135, 300) destiné à disposer des ressources à l'intérieur d'une tour d'éolienne, avec
∘ une section principale (310), et
∘ au moins une section d'extension,
∘ dans lequel la section principale (310) et l'au moins une section d'extension sont disposées de manière adjacente l'une à l'autre dans la direction de bague de segment (R),
∘ dans lequel la section principale (310) et l'au moins une section d'extension forment un angle de dispositif de maintien (302),
- un dispositif de couplage (132, 400) , qui est disposé dans une section de couplage (121) du segment d'enveloppe de manière à jouxter le côté d'aboutement horizontal supérieur (202),
- dans lequel le dispositif de maintien (135, 300) est couplé au segment d'enveloppe au moyen du dispositif de couplage (132, 400),
- **caractérisé par** un palier horizontal (450, 452, 454), qui est disposé dans une section de palier de manière à jouxter le côté d'aboutement horizontal inférieur du segment d'enveloppe, dans lequel le dispositif de maintien (135, 300) est monté au moyen du palier horizontal (450, 452, 454).

2. Segment de tour d'éolienne (120, 130) selon la revendication précédente,
- dans lequel le palier horizontal (450, 452, 454) est disposé et réalisé pour agir comme un palier fixe pour des forces de palier de manière orthogonale à la hauteur de segment (H) et/ou à une direction principale d'extension du dispositif de maintien (135, 300) et/ou de préférence comme un palier flottant pour des forces de palier en direction de la hauteur de segment (H) et/ou dans la direction principale d'extension du dispositif de maintien (135, 300).

3. Segment de tour d'éolienne (120, 130) selon au moins l'une des revendications précédentes, dans lequel
- le dispositif de couplage (132, 400) est disposé et réalisé pour coupler, lors d'un agencement conforme du segment de tour d'éolienne (120, 130), le dispositif de maintien (135, 300) au segment d'enveloppe de telle manière que la direction principale d'extension du dispositif de maintien (135, 300) est sensiblement orientée verticalement, et/ou
- le dispositif de couplage (132, 400) est disposé et réalisé sur le dispositif de maintien (135, 300) pour agir comme palier fixe pour des forces en direction de la hauteur de segment (H) et/ou de la direction d'extension principale du dispositif de maintien (135, 300).

4. Segment de tour d'éolienne (120, 130) selon au moins l'une des revendications précédentes,
- comprenant un amortisseur de vibrations, dans lequel l'amortisseur de vibrations est disposé et réalisé pour amortir des vibrations orthogonalement à la hauteur de segment (H) et/ou à la direction d'extension principale du dispositif de maintien (135, 300),
- dans lequel, de préférence, le palier horizontal (450, 452, 454) comprend l'amortisseur de vibrations et/ou, de préférence, le palier horizontal (450, 452, 454) forme l'amortisseur de vibrations,
- dans lequel l'amortisseur de vibrations est de préférence réalisé par un, deux ou plusieurs éléments reposant sur un côté, sur deux côtés ou sur plusieurs côtés sur le dispositif de maintien (135, 300), en particulier une plaque ou deux plaques ou plus, par exemple en matière plastique.

5. Segment de tour d'éolienne (120, 130) selon au moins l'une des revendications précédentes, dans lequel une échelle (340) est disposée sur la section principale (310).

6. Segment de tour d'éolienne (120, 130) selon au moins l'une des revendications précédentes, comprenant une première section d'extension (320) et une deuxième section d'extension (330), dans lequel la première section d'extension (320) est disposée sur un premier côté de la section principale (310) et la deuxième section d'extension (330) est disposée sur un deuxième côté de la section principale (310) opposé au premier côté.

7. Segment de tour d'éolienne (120, 130) selon au moins l'une des revendications précédentes, comprenant au moins un câble,
- dans lequel le câble est disposé sur au moins une section d'extension, et
- est de préférence éloigné de la section principale (310) de moins de 1,5 mètre et/ou de moins de 1,25 mètre et/ou de moins de 1 mètre et/ou de moins de 0,75 mètre et/ou de moins de 0,5 mètre.

8. Segment de tour d'éolienne (120, 130) selon au moins l'une des revendications précédentes, dans lequel
- l'angle de dispositif de maintien (302) est inférieur à 170 degrés d'arc, et/ou inférieur à 165 degrés d'arc, et/ou inférieur à 160 degrés d'arc, et/ou inférieur à 155 degrés d'arc, et/ou inférieur à 150 degrés d'arc, et/ou inférieur à 145 degrés d'arc.

9. Segment de tour d'éolienne (120, 130) selon au moins l'une des revendications précédentes, dans lequel
- le segment d'enveloppe présente un axe de symétrie,
- le dispositif de maintien (135, 300) s'étend d'une extrémité de maintien supérieure à une extrémité de maintien inférieure, et
- le dispositif de maintien (135, 300) est disposé sur le segment d'enveloppe de telle manière qu'un premier écartement axial entre l'axe de symétrie et l'extrémité de maintien supérieure est supérieur à un deuxième écartement axial entre l'axe de symétrie et l'extrémité de maintien inférieure.

10. Tour d'éolienne comprenant au moins un segment de tour d'éolienne (120, 130) selon au moins l'une des revendications 1 à 9.

11. Éolienne (100) comprenant une tour d'éolienne selon la revendication précédente.

12. Utilisation d'un ensemble de maintien avec un dispositif de maintien (135, 300) et un dispositif de couplage (132, 400) dans un segment de tour d'éolienne (120, 130) selon au moins l'une des revendications 1 à 9 pour disposer de ressources, en particulier des câbles, dans laquelle
- le dispositif de maintien (135, 300) comprend une section principale (310) et au moins une section d'extension,
- la section principale (310) et au moins une section d'extension sont disposées de manière adjacente l'une à l'autre dans une direction de bague de segment (R) du segment de tour d'éolienne (120, 130), et
- la section principale (310) et au moins une section d'extension forment un angle de dispositif de maintien (302).

13. Procédé de montage d'un segment de tour d'éolienne selon au moins l'une des revendications 1 à 9, comprenant
- la fourniture d'un segment d'enveloppe, d'un dispositif de maintien (135, 300) et d'un dispositif de couplage (132, 400),
- dans lequel le dispositif de maintien (135, 300) s'étend dans une direction principale d'extension, dans la direction de la largeur et dans la direction de l'épaisseur,
- le soulèvement du dispositif de maintien (135, 300) au moyen d'au moins trois éléments de transport, dans lequel
∘ les trois éléments de transport sont disposés sur un point de butée d'un mécanisme de levage, et
∘ les éléments de transport sont disposés sur au moins trois points de butée du dispositif de maintien (135, 300), dans lequel au moins deux points de butée sont espacés dans la direction principale d'extension du dispositif de maintien (135, 300) et au moins deux points de butée sont espacés dans la direction de la largeur,
- la disposition du dispositif de maintien (135, 300) sur une surface circonférentielle intérieure du segment d'enveloppe,
- le couplage du dispositif de maintien (135, 300) au segment d'enveloppe avec le dispositif de couplage (132, 400).

14. Procédé selon la revendication précédente, comprenant
- la mise à disposition d'une traverse, dans lequel
- les au moins trois éléments de levage sont disposés entre la traverse et le dispositif de maintien (135, 300), et
- les éléments de levage sont disposés sur au moins deux points de butée de traverse sur la traverse, dans lequel les deux points de butée de traverse sont espacés l'un de l'autre dans une direction longitudinale de la traverse.

15. Procédé de montage d'une section de tour d'éolienne comprenant
- la fourniture d'au moins un segment de tour d'éolienne (120, 130) selon au moins l'une des revendications 1 à 9 et d'au moins un deuxième segment d'enveloppe (210) ;
- la disposition de l'au moins un segment de tour d'éolienne (120, 130) et de l'au moins un deuxième segment d'enveloppe (210) de telle manière qu'ils viennent en butée sur des côtés d'aboutement verticaux ;
- de préférence la fixation l'un sur l'autre de l'au moins un segment de tour d'éolienne (120, 130) et de l'au moins un deuxième segment d'enveloppe (210).
